# EUROPEAN PATENT APPLICATION

(11) **EP 3 992 157 A1**
(43) Date of publication of application: **04.05.2022**
(21) Application number: 20832175.2
(22) Date of filing: 18.06.2020
(51) Int. Cl.: C02F 1/58, B01D 24/00, B01D 24/46, B01D 29/01, B01D 29/66, B03B 5/28, C02F 5/00

(54) **WATER SOFTENING SYSTEM AND WATER SOFTENING DEVICE**

(30) Priority: 26.06.2019 JP 2019118783; 31.07.2019 JP 2019140592; 16.12.2019 JP 2019226563
(71) Applicant: Panasonic Intellectual Property Management Co., Ltd., Osaka-shi, Osaka 540-6207 (JP)
(72) Inventor: YANO Hiroshi, Osaka-shi, Osaka 540-6207 (JP); MAEDA Yasunari, Osaka-shi, Osaka 540-6207 (JP); KANDA Takuya, Osaka-shi, Osaka 540-6207 (JP); MARUO Yuko, Osaka-shi, Osaka 540-6207 (JP); TAKANO Takayoshi, Osaka-shi, Osaka 540-6207 (JP)
(74) Representative: Müller-Boré & Partner Patentanwälte PartG mbB
(86) International application number: PCT/JP2020/023922
(87) International publication number: WO 2020/262185

(57) **Abstract**

A water softening system 10 includes a water feed channel 20 through which water to be treated flows, and a crystallization unit 30 that causes a metal ion contained in the water to be treated to precipitate. Further, the water softening system 10 includes a separation unit 40 that separates the water to be treated having passed through the crystallization unit 30 into a crystal obtained through precipitation by the crystallization unit 30 and soft water. Further, the water feed channel 20 is configured so that at least a part thereof functions as a feed channel being a pressure application system in a substantially sealed state, and the crystallization unit 30 and the separation unit 40 are connected to parts corresponding to the feed channel being a pressure application system in a substantially sealed state in the water feed channel 20.

## Description

### Technical Field

The present disclosure relates to a water softening system and a water softening device.

### Background Art

As disclosed in Patent Literature 1 given below, there has hitherto been known a water softening device that softens water to be treated by causing the water to be treated to pass through an ion exchange resin layer and causing the ion exchange resin layer to capture a metal ion component in the water to be treated.

The water softening device disclosed in Patent Literature 1 includes a salt water tank that stores salt water. Further, the ion exchange resin that captures a metal ion can be regenerated through use of the salt water in the salt water tank.

As a water softening method in another water softening device, there is known a method in which a metal ion is caused to precipitate as a crystal in some way and the crystal is removed by a filtering medium such as a filter and pebbles. In such a method, when water softening continues, crystals adhere to the filtering medium, and a phenomenon that is so-called fouling is caused. Thus, performance of the filtering medium is degraded. In view of this, washing is required for removing the crystals adhering to the filtering medium so as to prevent performance degradation of the filtering medium.

In the water softening device that employs the method as described above, the crystals adhering to the filtering medium are removed through backwashing. For example, when it is assumed that the hardness of raw water is 300 mg and an amount of water used per day is 1,000 L, several hundred grams of crystal particles need to be discharged per day. Thus, in order to prevent fouling of the filtering medium, frequent backwashing treatment is required, and hence a large amount of water is required. Further, water used for backwashing treatment cannot be used for other purposes and discharged, and hence is called wasted water. Such wasted water needs to be reduced, and various methods of applying solid substances contained in the wasted water have been examined (see Patent Literatures 2 and 3).

Patent Literature 2 describes a technique of efficiently removing calcium by reusing a calcium carbonate concentrate generated at the time of removing calcium from raw water. Further, Patent Literature 3 describes a technique in which a metal ion in raw water is caused to precipitate as a solid substance (crystal), the solid substance (crystal) is separated by a film module, and wasted washing water generated at the time of subjecting the film module to counter pressure washing is reused.

### Citation List

### Patent Literature

[PTL 1] Japanese Unexamined Patent Application Publication No. 2016-112528
[PTL 2] Japanese Unexamined Patent Application Publication No. 2017-136570
[PTL 3] Japanese Patent No. 6444606

### Summary of Invention

### Technical Problem

However, when the ion exchange resin that captures a metal ion is regenerated through use of salt water as in the technique described in Patent Literature 1 described above, a large amount of salt is required. As a result, water discharged at the time of regenerating the ion exchange resin may disadvantageously affect the environment. Further, both in Patent Literatures 1 and 2, the wasted water is reused. However, a size of the crystal in the wasted water is not taken into consideration, and hence it is assumed that a coarse crystal may adhere to the filtering medium again. Thus, a coarse crystal causes fouling again, the filtering medium needs to be washed. In other words, even when wasted water is reused, frequent washing is inevitably required, and hence a large amount of wasted water is generated.

The present disclosure has been made in view of the above-mentioned problem in the related art. Further, an object of the present disclosure is to provide a water softening system and a water softening device that are capable of reducing negative effects on the environment.

Another object of the present disclosure is to provide a water softening system and a water softening device that are capable of reducing wasted water at the time of subjecting a separation unit to backwashing, the separation unit including a filtering medium for filtering and separating a metal ion-derived crystal, and are capable of reusing, as water containing a seed crystal, part of the water used for backwashing.

### Solution to Problem

In order to solve the above-mentioned problem, a water softening system according to a first aspect of the present disclosure includes a water feed channel through which water to be treated flows, and a crystallization unit that causes a metal ion contained in the water to be treated to precipitate. Further, the water softening system includes a separation unit that separates the water to be treated having passed through the crystallization unit into a crystal obtained through precipitation by the crystallization unit and soft water. Further, the water feed channel is configured so that at least a part thereof functions as a feed channel being a pressure application system in a substantially sealed state, and the crystallization unit and the separation unit are connected to parts corresponding to the feed channel being a pressure application system in a substantially sealed state in the water feed channel.

Further, a water softening device according to a second aspect of the present disclosure includes the water softening system described above.

Further, a water softening system according to a third aspect of the present disclosure includes a crystallization unit that causes a metal ion contained in water to be treated, which contains the metal ion, to precipitate as a crystal, a separation unit that includes a filtering medium for filtering the crystal obtained through precipitation in the crystallization unit, a classification/separation unit that performs separation by classifying water to be treated that contains the crystal adhering to the filtering medium of the separation unit into water to be treated that contains a crystal having a small size and passing through the filtering medium of the separation unit and water to be treated that contains a crystal having a large size and not passing through the filtering medium, when the crystal adhering to the filtering medium of the separation unit is discharged to the outside of the system through backwashing, and a returning channel that returns, to the crystallization unit or the upstream side of the crystallization unit, the water to be treated that contains the crystal having a small size among the two kinds of water to be treated after classification and separation in the classification/separation unit. When the water to be treated is softened, water to be treated passes through the crystallization unit and the separation unit at least once. When a crystal adhering to the filtering medium of the separation unit is discharged to the outside of the system through backwashing, the water to be treated passes through the separation unit and the classification/separation unit, the water to be treated that contains the crystal having a small size among the two kinds of water to be treated after classification and separation in the classification/separation unit returns to the crystallization unit or the upstream side of the crystallization unit through the returning channel, and the water to be treated that contains the crystal having a large size is discharged to the outside of the system.

A water softening device according to a fourth aspect of the present disclosure is a water softening device including the water softening system according to the first aspect.

### Brief Description of Drawings

FIG. 1 is a diagram illustrating a water softening device according to a first embodiment and schematically illustrating the water softening device when crystallization treatment is performed.
FIG. 2 is a diagram illustrating the water softening device according to the first embodiment and schematically illustrating the water softening device when separation treatment is performed.
FIG. 3 is a diagram illustrating a water softening device according to a second embodiment and schematically illustrating the water softening device when crystallization treatment is performed.
FIG. 4 is a diagram illustrating the water softening device according to the second embodiment and schematically illustrating the water softening device when separation treatment is performed.
FIG. 5 is a diagram illustrating a water softening device according to a third embodiment and schematically illustrating the water softening device when crystallization treatment is performed.
FIG. 6 is a diagram illustrating the water softening device according to the third embodiment and schematically illustrating the water softening device when separation treatment is performed.
FIG. 7 is a diagram illustrating a water softening device according to a fourth embodiment and schematically illustrating the water softening device when crystallization treatment is performed.
FIG. 8 is a diagram illustrating the water softening device according to the fourth embodiment and schematically illustrating the water softening device when separation treatment is performed.
FIG. 9 is a diagram illustrating a water softening device according to a fifth embodiment and schematically illustrating the water softening device when crystallization treatment is performed.
FIG. 10 is a diagram illustrating the water softening device according to the fifth embodiment and schematically illustrating the water softening device when separation treatment is performed.
FIG. 11 is a diagram illustrating a water softening device according to a sixth embodiment and schematically illustrating the water softening device when crystallization treatment is performed.
FIG. 12 is a diagram illustrating the water softening device according to the sixth embodiment and schematically illustrating the water softening device when separation treatment is performed.
FIG. 13 is a diagram illustrating a water softening device according to a seventh embodiment and schematically the water softening device when water is used while performing crystallization treatment.
FIG. 14 is a diagram illustrating the water softening device according to the seventh embodiment, and schematically illustrating the water softening device when backwashing treatment is performed.
FIG. 15 is a diagram illustrating a water softening device according to an eighth embodiment and schematically illustrating the water softening device when crystallization treatment is performed.
FIG. 16 is a diagram illustrating the water softening device according to the eighth embodiment and schematically illustrating the water softening device when water is used.
FIG. 17 is a diagram illustrating the water softening device according to the eighth embodiment and schematically illustrating the water softening device when backwashing treatment is performed.
FIG. 18 is a diagram illustrating a water softening device according to a ninth embodiment and schematically illustrating the water softening device when crystallization treatment is performed.
FIG. 19 is a diagram illustrating the water softening device according to the ninth embodiment and schematically illustrating the water softening device when water is used.
FIG. 20 is a diagram illustrating the water softening device according to the ninth embodiment and schematically illustrating the water softening device when backwashing treatment is performed.

### Description of Embodiments

A water softening device according to each of the embodiments is described below with reference to the drawings. Note that, in the description and the drawings for each of the embodiments, the same parts are denoted with the same reference symbols. Description for the same parts denoted with the same reference symbols is not repeated in the succeeding embodiments. When comparison is made on the drawings between the first embodiment and the succeeding embodiments, the same parts denoted with the same reference symbols have similar configurations and functions unless otherwise noted.

### (First Embodiment)

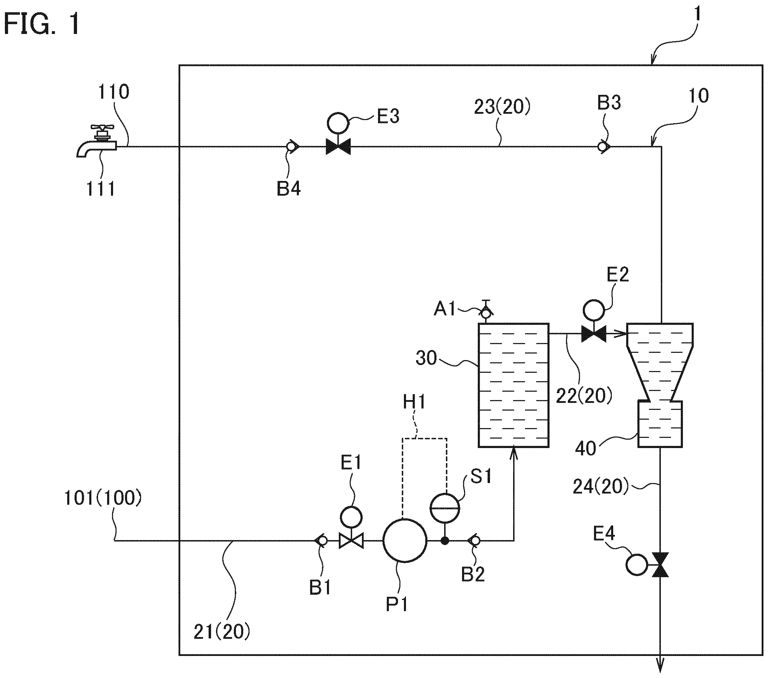

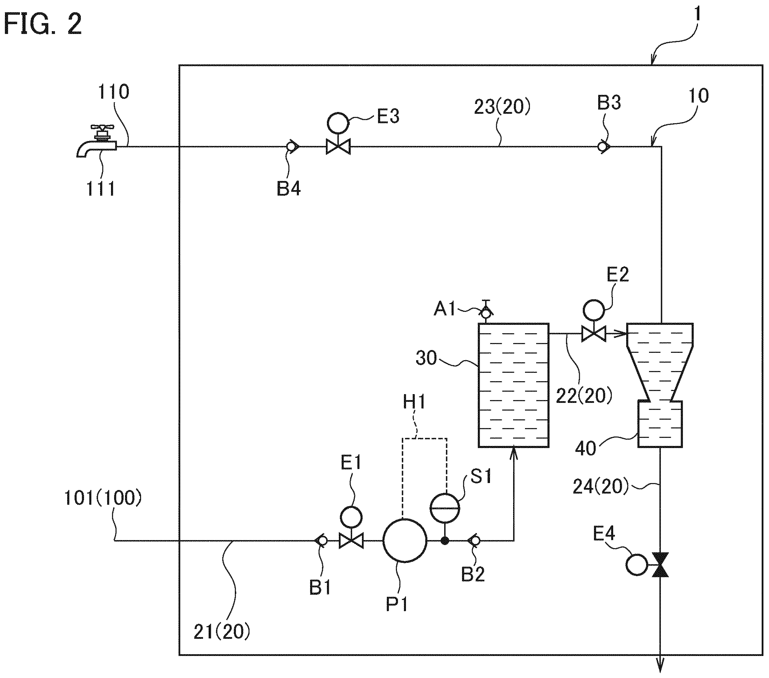

First, with reference to FIG. 1 and FIG. 2, a water softening device 1 according to the first embodiment is described.

The water softening device 1 according to the present embodiment is a device that generates soft water by removing, from water to be treated that is introduced, a metal ion such as a calcium ion and a magnesium ion contained in the water to be treated. In the present embodiment, there is exemplified the water softening device 1 of an point-of-entry (POE) type that is installed at an entrance of a construction such as a house and a building and is capable of supplying treated water being softened to the entire construction while performing treatment to water to be treated.

Specifically, the upstream side of the water softening device 1 is connected to a water-to-be-treated supply source 100 such as a clean water pipe 101, and the downstream side thereof is connected to a water supply pipe 110 laying in the construction. Further, a metal ion contained in water to be treated that is supplied from the clean water pipe 101 is removed in the water softening device 1, treated water (soft water) obtained by removing the metal ion is supplied to the water supply pipe 110, and then the soft water is supplied from the tap 111 or the like in a household. Note that the water-to-be-treated supply source 100 is not limited to the clean water pipe 101, and a water source such as a well, a river, and a pond may be regarded as the water-to-be-treated supply source 100. When a water source such as a well, a river, and a pond is regarded as the water-to-be-treated supply source 100, water or rain water pumped out from the water source is regarded as the water to be treated that is supplied to the water softening device 1.

Here, the water softening device 1 according to the present embodiment employs a water softening system 10 that softens the water to be treated by crystallizing a metal ion and separating the obtained crystal away from the water to be treated.

When the water softening system 10 as described above is employed, the water to be treated can be softened without using salt water. This can reduce negative effects on the environment.

The water softening system 10 includes a water feed channel 20 through which the water to be treated flows, a crystallization unit 30 that causes the metal ion contained in the water to be treated to precipitate, and a separation unit 40 that separates the water to be treated having passed through the crystallization unit 30 into a crystal obtained through precipitation by the crystallization unit 30 and soft water.

The crystallization unit 30 and the separation unit 40 are connected to the water feed channel 20 so that the crystallization unit 30 is positioned upstream and the separation unit 40 is positioned downstream.

Specifically, the water feed channel 20 includes a crystallization unit introduction channel 21 that is connected to the upstream side of the crystallization unit 30 and that is capable of introducing the water to be treated into the crystallization unit 30. The upstream side of the crystallization unit introduction channel 21 is connected to the water-to-be-treated supply source 100 such as the clean water pipe 101, and the water to be treated that is supplied from the water-to-be-treated supply source 100 passes through the crystallization unit introduction channel 21, and is introduced into the crystallization unit 30.

Further, in the present embodiment, a check valve B1, a valve E1, a pump (pressure raising means) P1, a pressure sensor S1, and a check valve B2 are connected to the crystallization unit introduction channel 21 in the stated order from upstream.

Further, the water feed channel 20 includes a separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30. The water to be treated that is supplied from the crystallization unit 30 to the separation unit 40 passes through the separation unit introduction channel 22, and is introduced into the separation unit 40. A valve E2 is connected to the separation unit introduction channel 22.

Further, the water to be treated passes through the crystallization unit introduction channel 21, and is supplied into the crystallization unit 30. Then, the metal ion is crystallized in the crystallization unit 30. The crystallization unit 30 may employ a freely-selected method of crystallizing the metal ion in the water to be treated as long as crystallization can be performed without using salt water, and various methods may be used. For example, a method of performing crystallization by injecting a chemical agent into the water to be treated that is introduced into the crystallization unit 30 and thus alkalizing the water to be treated may be employed. Alternatively, a method of performing crystallization by generating alkali ion water through electrolysis and thus alkalizing the water to be treated may be employed. Further, the metal ion may be crystallized through use of micro bubbles present in the water to be treated (micro bubbles generated in the water to be treated).

Further, the water to be treated after the metal ion is crystallized in the crystallization unit 30 passes through the separation unit introduction channel 22, is introduced into the separation unit 40, and is separated into a crystal obtained by crystallizing the metal ion and soft water by the separation unit 40.

For example, a cyclone type liquid-solid separator may be used as the separation unit 40. A cyclone type liquid-solid separator is a device that promotes sedimentation of a solid substance suspended in liquid through use of a centrifugal force instead of a gravitational force.

Further, a treated-water feed channel 23 is connected to an upper part of the separation unit 40, and a discharge channel 24 is connected to a lower part of the separation unit 40. Liquid (treated water: soft water) obtained by centrifugal separation in the separation unit 40 is introduced into the treated-water feed channel 23. A solid substance (crystal) obtained by centrifugal separation in the separation unit 40 is introduced into the discharge channel 24.

As described above, in the present embodiment, the water feed channel 20 further includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

In the present embodiment, the downstream side of the treated-water feed channel 23 is connected to the water supply pipe 110, and a check valve B3, a valve E3, and the check valve B4 are connected to the treated-water feed channel 23 in the stated order from upstream. Further, the tap 111 is connected to the downstream side of the water supply pipe 110.

Meanwhile, a valve E4 is connected to the discharge channel 24. When the valve E4 is closed, a metal crystal can be stored in the discharge channel 24. Further, when the valve E4 is opened, the metal crystal stored in the discharge channel 24 can be discharged to the outside of the water softening device 1.

Note that an air vent valve A1 is mounted to the water softening system 10. The air vent valve A1 removes air in the water softening system 10. The present embodiment exemplified a case where the air vent valve A1 is mounted to the crystallization unit 30 (see FIG. 1 and FIG. 2). However, the mounting position of the air vent valve A1 is not limited to the crystallization unit 30, and may be variously selected such as the uppermost part of the water softening system 10.

Here, in the present embodiment, at least a part of the water feed channel 20 is configured to function as a feed channel being a pressure application system in a substantially sealed state.

In the present embodiment, the feed channel being a pressure application system in a substantially sealed state is obtained by closing at least the valve E3 and the valve E4.

Specifically, first, the valve E3 and the valve E4 are closed, and hence a part of a space in the water feed channel 20 is obtained as a substantially sealed space. Further, under a state in which a part of the space in the water feed channel 20 is obtained as a substantially sealed space, the pump (pressure raising means) PI is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the crystallization unit introduction channel 21 downstream of the pump PI, the entirety of the separation unit introduction channel 22, the treated-water feed channel 23 upstream of the valve E3, and the discharge channel 24 upstream of the valve E4 function as the feed channel being a pressure application system in a substantially sealed state.

Further, the crystallization unit 30 and the separation unit 40 are connected to parts corresponding to the feed channel being a pressure application system in a substantially sealed state in the water feed channel 20.

Therefore, the internal space of the crystallization unit 30 and the internal space of the separation unit 40 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than a predetermined value. With this, soft water can be supplied from all water supply ports (such as the tap 111) provided in a construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 includes the pressure sensor (pressure measuring means) S1 that measures a pressure in the feed channel being a pressure application system in a substantially sealed state and the pump (pressure raising means) PI that supplies water to the feed channel being a pressure application system in a substantially sealed state and raises a pressure.

Further, when the pressure in the feed channel being a pressure application system in a substantially sealed state, which is measured by the pressure sensor S1, is less than a predetermined value, the pump PI is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump PI is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

In the present embodiment, the pressure sensor S1 is electrically connected to a control unit (omitted in illustration) of the pump P1 via a wiring line HI, and a drive of the pump PI is controlled based on the water pressure in the crystallization unit introduction channel 21, which is measured by the pressure sensor S1.

Note that, when a configuration in which the water feed channel 20 is directly connected to the clean water pipe 101 is employed as in the present embodiment, the pressure in the feed channel being a pressure application system in a substantially sealed state can be equal to or greater than the predetermined value in some cases, due to the water to be treated, which is supplied from the clean water pipe 101 into the water feed channel 20. Specifically, soft water can be supplied from all the water supply ports (such as the tap 111) provided in the construction in some cases, due to the pressure of the water supplied from the clean water pipe 101 into the water feed channel 20.

Further, in such a case, the pump PI functioning as a pressure raising means may not be provided. Note that, when the pump P1 is not provided, the entirety of the crystallization unit introduction channel 21, the entirety of the separation unit introduction channel 22, the treated-water feed channel 23 upstream of the valve E3, and the discharge channel 24 upstream of the valve E4 function as the feed channel being a pressure application system in a substantially sealed state.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 1, the valve E3 and the valve E4 are closed to obtain the feed channel being a pressure application system in a substantially sealed state. At the same time, the valve E2 is closed, and thus the water to be treated , which is introduced into the crystallization unit 30, stagnates in the crystallization unit 30 for more than a predetermined time period. In this state, the valve E1 is opened.

Further, crystallization of a metal ion continues until the water to be treated having predetermined hardness is obtained. In this state, for example, the stagnation time period of the water to be treated, which is introduced into the crystallization unit 30, is set as appropriate. With this, adjustment can be performed to obtain a predetermined precipitation amount of the metal ion. Note that the water to be treated can be fed into the crystallization unit 30 by operating the pump PI. In this case, the pump PI also has a function as a liquid feeding means that feeds the water to be treated into the crystallization unit 30.

Further, after the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 2, the valve E2 and the valve E3 are opened under a state in which the valve E4 is closed. With this, the water to be treated is fed into the separation unit 40, and the soft water obtained through separation in the separation unit 40 passes through the treated-water feed channel 23, and is supplied to the water supply pipe 110. In this state, the valve E1 is opened.

Note that the water to be treated, which is fed into the separation unit 40, is separated into the soft water and the crystallized metal ion by centrifugal separation.

Incidentally, a force of the water flow is not required so much when the water to be treated is introduced into the crystallization unit 30 for crystallization. However, when a cyclone type liquid-solid separator is used to perform centrifugal separation, a relatively large pressure and a relatively high flow rate are required.

In this manner, in general, the flow rate and the pressure that are required in the separation unit 40 are greater than the flow rate and the pressure for crystallization in the crystallization unit 30.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump P1, or may be achieved by increasing an output of the pump PI by inverter control or the like. When an output of the pump P1 is increased by inverter control or the like, the pump P1 also has a function as a forcibly feeding means that forcibly feeds the water to be treated into the separation unit 40.

Further, the soft water being liquid obtained through separation in the separation unit 40 is introduced into the treated-water feed channel 23, and the metal crystal being a solid substance is introduced into the discharge channel 24. Note that the metal crystal stored in the discharge channel 24 can be discharged to the outside of the water softening device 1 by opening the valve E4.

Meanwhile, the soft water introduced from the treated-water feed channel 23 into the water supply pipe 110 is supplied from the tap 111 by opening the tap 111 connected to the water supply pipe 110.

Note that the temperature of the soft water obtained from the water softening device 1 is preferably equal to or lower than 40 degrees Celsius, more preferably, equal to or lower than 30 degrees Celsius.

### (Second Embodiment)

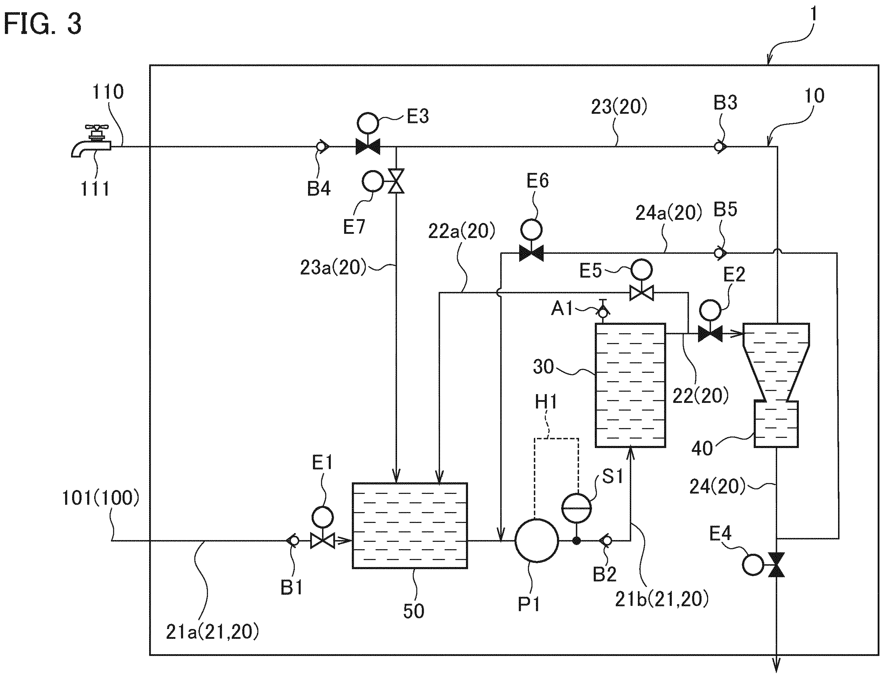

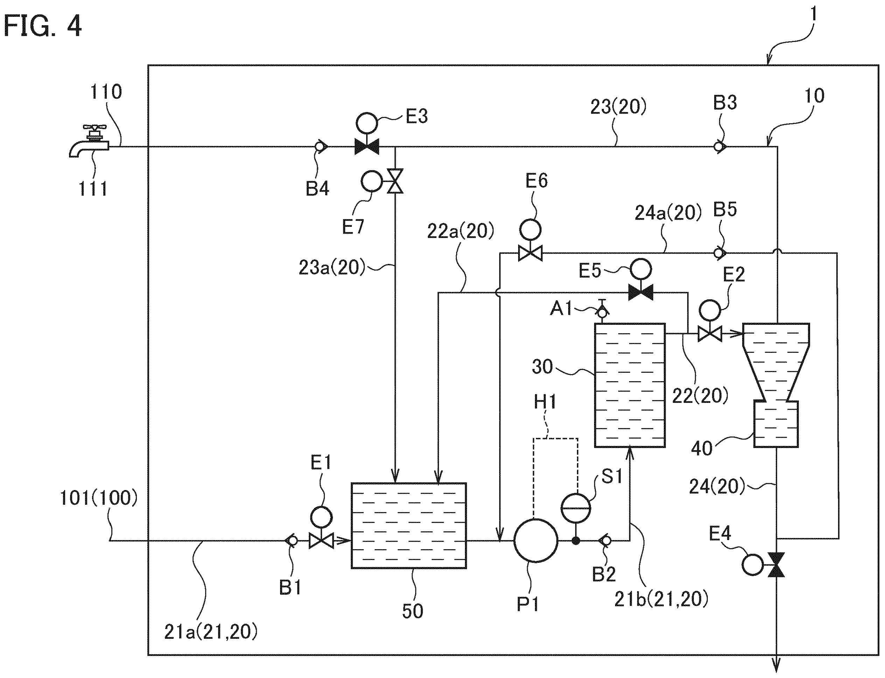

Next, with reference to FIG. 3 and FIG. 4, the water softening device 1 according to a second embodiment is described.

In the present embodiment, there is also exemplified the water softening device 1 of an point-of-entry (POE) type that is installed at an entrance of a construction such as a house and a building and is capable of supplying treated water being softened to the entire construction while performing treatment to water to be treated.

Further, in the present embodiment, the water softening device 1 also employs the water softening system 10 that softens the water to be treated by crystallizing a metal ion and separating the obtained crystal away from the water to be treated.

The water softening system 10 includes the water feed channel 20 through which the water to be treated flows, the crystallization unit 30 that causes the metal ion contained in the water to be treated to precipitate, and the separation unit 40 that separates the water to be treated having passed through the crystallization unit 30 into a crystal obtained through precipitation by the crystallization unit 30 and soft water.

Further, the crystallization unit 30 and the separation unit 40 are connected to the water feed channel 20 so that the crystallization unit 30 is positioned upstream and the separation unit 40 is positioned downstream. The configurations of the crystallization unit 30 and the separation unit 40 may be the same configurations as those in the first embodiment described above.

Further, in the present embodiment, the water feed channel 20 also includes the crystallization unit introduction channel 21 that is connected to the upstream side of the crystallization unit 30 and that is capable of introducing the water to be treated into the crystallization unit 30. The upstream side of the crystallization unit introduction channel 21 is also connected to the water-to-be-treated supply source 100 such as the clean water pipe 101. In this manner, in the present embodiment, the water softening device 1 also has a configuration in which the water feed channel 20 is directly connected to the clean water pipe 101.

Here, in the present embodiment, the water softening system 10 includes a buffer tank 50 that is connected to the water feed channel 20 at a position upstream of the crystallization unit 30 and stores the water to be treated. Specifically, the water softening system 10 according to the present embodiment is provided with the buffer tank 50 capable of storing a certain amount of the water to be treated.

The buffer tank 50 is connected to the middle of the crystallization unit introduction channel 21. Specifically, the buffer tank 50 is connected to the crystallization unit introduction channel 21 at a position downstream of the valve E1 and upstream of the pump PI.

Therefore, in the present embodiment, the check valve B1, the valve E1, the buffer tank 50, the pump (pressure raising means) PI, the pressure sensor S1, and the check valve B2 are connected to the crystallization unit introduction channel 21 in the stated order from upstream.

In this manner, in the present embodiment, the crystallization unit introduction channel 21 includes an introduction channel 21a that is positioned upstream of the buffer tank 50 and introduces the water to be treated into the buffer tank 50. Moreover, the crystallization unit introduction channel 21 includes an introduction channel 21b that introduces the water to be treated, which is supplied from the buffer tank 50, into the crystallization unit 30.

Further, the water feed channel 20 includes the separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30. Further, the valve E2 is connected to the separation unit introduction channel 22.

Moreover, in the present embodiment, the water feed channel 20 includes a circulation channel 22a capable of circulating the water to be treated, which is introduced into the separation unit introduction channel 22, in the buffer tank 50. The upstream side of the circulation channel 22a is connected to the middle of the separation unit introduction channel 22 while branching from the separation unit introduction channel 22, and the downstream side thereof is connected to the buffer tank 50.

In the present embodiment, the upstream side of the circulation channel 22a is connected to the separation unit introduction channel 22 at a position upstream of the valve E2. Further, when the valve E2 is closed, the introduction channel 21b and the circulation channel 22a forms a circulation channel through which the water to be treated circulates between the buffer tank 50 and the crystallization unit 30. Further, a valve E5 is connected to the middle of the circulation channel 22a.

In this manner, in the present embodiment, when crystallization of the metal ion is performed, the water to be treated, which is stored in the buffer tank 50, is caused to circulate through the circulation channel under a state in which a certain amount of the water to be treated is stored in the buffer tank 50. In this manner, the time period required for crystallization of the metal ion in the water to be treated is increased so as to generate the soft water having the desired hardness.

In this manner, in the process of crystallization of the metal ion, the water to be treated is caused to circulate through the circulation channel. With this, the soft water having the desired hardness can be obtained more securely as compared to a case of crystallization of the metal ion in one pass.

Further, in the present embodiment, the water feed channel 20 also includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

The downstream side of the treated-water feed channel 23 is connected to the water supply pipe 110, and the check valve B3, the valve E3, and the check valve B4 are connected to the treated-water feed channel 23 in the stated order from upstream. Further, the tap 111 is connected to the downstream side of the water supply pipe 110.

Meanwhile, the valve E4 is connected to the discharge channel 24. When the valve E4 is closed, a metal crystal can be stored in the discharge channel 24. Further, when the valve E4 is opened, the metal crystal stored in the discharge channel 24 can be discharged to the outside of the water softening device 1.

Moreover, in the present embodiment, the water feed channel 20 includes a circulation channel 23a capable of circulating the soft water, which is introduced into the treated-water feed channel 23, in the buffer tank 50. The upstream side of the circulation channel 23a is connected to the middle of the treated-water feed channel 23 while branching from the treated-water feed channel 23, and the downstream thereof is connected to the buffer tank 50.

In the present embodiment, the upstream of the circulation channel 23a is connected to the treated-water feed channel 23 at a position upstream of the valve E3 and downstream of the check valve B3. In this manner, when the tap 111 is opened while opening the valve E3, and the soft water is supplied from the tap 111, part of the soft water introduced into the treated-water feed channel 23 can return from the circulation channel 23a into the buffer tank 50. Note that a valve E7 is connected to the middle of the circulation channel 23a.

Further, when the valve E3 is closed, a circulation channel through which the soft water circulates from the buffer tank 50 via the crystallization unit 30 and the separation unit 40. With this, the soft water can be caused to circulate from the buffer tank 50 via the crystallization unit 30 and the separation unit 40. In this case, the softened water is stored in the buffer tank 50.

Further, the water feed channel 20 includes a circulation channel 24a capable of circulating the soft water, which is introduced into the discharge channel 24, through the introduction channel 21b. The upstream side of the circulation channel 24a is connected to the middle of the discharge channel 24 while branching from the discharge channel 24, and the downstream thereof is connected to the introduction channel 21b at a position upstream of the pump PI.

In the present embodiment, the upstream side of the circulation channel 24a is connected to the discharge channel 24 at a position upstream of the valve E4. Further, under a state in which the valve E4 is closed to store the metal crystal in the discharge channel 24, the liquid (soft water), which is introduced into the discharge channel 24 together with the metal crystal before separation, returns to the channel where liquid-solid separation treatment is performed. Note that a check valve B5 and a valve E6 are connected to the middle of the circulation channel 24a in the stated order from upstream.

In this manner, in the present embodiment, the liquid (soft water), which is introduced into the discharge channel 24 together with the metal crystal before separation, returns to the channel where liquid-solid separation treatment is performed. In this manner, the generated soft water can be prevented from being discharged from the discharge channel 24 to the outside of the water softening device 1.

Further, in the present embodiment, the air vent valve A1 is also mounted to the crystallization unit 30. The air vent valve A1 removes air in the water softening system 10. However, the mounting position of the air vent valve A1 is not limited to the crystallization unit 30, and may be variously selected such as the buffer tank 50 and the uppermost part of the water softening system 10.

Here, in the present embodiment, at least a part of the water feed channel 20 is also configured to function as the feed channel being a pressure application system in a substantially sealed state.

In the present embodiment, the feed channel being a pressure application system in a substantially sealed state is obtained by closing at least the valve E3 and the valve E4.

Specifically, first, the valve E3 and the valve E4 are closed, and hence a part of the space in the water feed channel 20 is obtained as a substantially sealed space. Further, under a state in which a part of the space in the water feed channel 20 is obtained as a substantially sealed space, the pump (pressure raising means) P1 is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the introduction channel 21b downstream of the pump PI, the entirety of the separation unit introduction channel 22, the treated-water feed channel 23 upstream of the valve E3, and the discharge channel 24 upstream of the valve E4 function as the feed channel being a pressure application system in a substantially sealed state.

Further, in the water feed channel 20, the entirety of the circulation channel 22a, the entirety of the circulation channel 23a, and the entirety of the circulation channel 24a function as the feed channel being a pressure application system in a substantially sealed state.

Further, the crystallization unit 30 and the separation unit 40 are connected to parts corresponding to the feed channel being a pressure application system in a substantially sealed state in the water feed channel 20. The internal space of the crystallization unit 30 and the internal space of the separation unit 40 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than the predetermined value. With this, the soft water can be supplied from all the water supply ports (such as the tap 111) provided in a construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 also includes the pressure sensor (pressure measuring means) S1 that measures a pressure in the feed channel being a pressure application system in a substantially sealed state and the pump (pressure raising means) P1 that supplies water to the feed channel being a pressure application system in a substantially sealed state and raises a pressure.

Further, when the pressure in the feed channel being a pressure application system in a substantially sealed state, which is measured by the pressure sensor S1, is less than the predetermined value, the pump P1 is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump PI is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

In the present embodiment, the pressure sensor S1 is electrically connected to the control unit (omitted in illustration) of the pump P1 via the wiring line HI, and a drive of the pump PI is controlled based on the water pressure in the crystallization unit introduction channel 21, which is measured by the pressure sensor S1.

Note that, in the present embodiment, there is also employed the configuration in which the water feed channel 20 is directly connected to the clean water pipe 101. Thus, the pressure in the feed channel being a pressure application system in a substantially sealed state can be equal to or greater than the predetermined value in some cases, due to the water to be treated, which is supplied from the clean water pipe 101 into the water feed channel 20. Therefore, in such a case, the pump P1 functioning as a pressure raising means may not be provided. When the pump P1 is not provided, the entirety of the crystallization unit introduction channel 21 also functions as the feed channel being a pressure application system in a substantially sealed state.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 3, the valve E3 and the valve E4 are closed to obtain the feed channel being a pressure application system in a substantially sealed state. At the same time, the valve E2 and the valve E6 are closed to form a batch-type line for generating soft water in the feed channel being a pressure application system in a substantially sealed state. In this state, the valve E1, the valve E5, and the valve E7 are opened. Note that the valve E7 may be closed.

Further, crystallization of a metal ion continues until the water to be treated having predetermined hardness is obtained. In this state, for example, a circulation amount (circulation time period and circulation frequency) of the water to be treated between the buffer tank 50 and the crystallization unit 30 is set as appropriate. With this, adjustment can be performed to obtain a predetermined precipitation amount of the metal ion. Note that completion of crystallization treatment may be determined based on a time period in accordance with the volume of the buffer tank 50, or may be determined based on an output detected by a hardness sensor or a turbidity sensor.

Further, feeding of the water to be treated (circulation in the circulation channel) may be performed by operating the pump PI. In this case, the pump P1 also has a function as a liquid feeding means that circulates the water to be treated between the crystallization unit 30 and the buffer tank 50.

Further, when the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 4, the valve E3 and the valve E4 are closed to obtain the feed channel being a pressure application system in a substantially sealed state. At the same time, the valve E2 is opened to feed the water to be treated into the separation unit 40. In this state, the valve E5 is closed, and the valve E1, the valve E6, and the valve E7 are opened. Note that the valve E6 may remain closed.

Further, the water to be treated, which is fed into the separation unit 40, is separated into the soft water and the crystallized metal ion by centrifugal separation.

Note that a force of the water flow is not required so much when the water to be treated is caused to circulate for crystallization. However, when a cyclone type liquid-solid separator is used to perform centrifugal separation, a relatively large pressure and a relatively high flow rate are required.

In this manner, in general, the flow rate and the pressure that are required in the separation unit 40 are greater than the flow rate and the pressure for circulating the water to be treated for crystallization.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump PI, or may be achieved by increasing an output of the pump PI by inverter control or the like. When an output of the pump P1 is increased, the pump PI also has a function as a forcibly feeding means that increases a water feed pressure and a flow rate of the water to be treated, which is fed into the separation unit 40, as compared to a pressure and a flow rate of the water to be treated that circulates between the crystallization unit 30 and the buffer tank 50.

Further, the soft water being liquid obtained through separation in the separation unit 40 is introduced into the treated-water feed channel 23, and the metal crystal being a solid substance is introduced into the discharge channel 24. In this state, the liquid (soft water), which is introduced into the discharge channel 24 together with the metal crystal before separation, passes through the circulation channel 24a, and returns to the channel where liquid-solid separation treatment is performed. Note that the metal crystal stored in the discharge channel 24 can be discharged to the outside of the water softening device 1 by opening the valve E4.

Meanwhile, the soft water introduced into the treated-water feed channel 23 passes through the circulation channel 23a, and is introduced into the buffer tank 50. Further, the water in the buffer tank 50 flows through (circulates in) the channel where liquid-solid separation treatment is performed. In this manner, the treated water that is subjected to softening (soft water) is stored in the buffer tank 50.

Further, the soft water stored in the buffer tank 50 is supplied from the tap 111 by opening the tap 111 connected to the water supply pipe 110 while opening the valve E3.

Incidentally, it is required to introduce the water (water to be treated or soft water) into the separation unit 40 at a flow rate equal to or greater than the predetermined value so as to perform separation of the soft water in the separation unit 40. Thus, when a water supply amount (usage amount) of the soft water supplied from the tap 111 is small, only part of the soft water after separation in the separation unit 40 is supplied from the tap 111. Specifically, part of the soft water after separation in the separation unit 40 is not supplied from the tap 111, and remains in the treated-water feed channel 23.

In view of this, in the present embodiment, when the soft water is supplied from the tap 111, the valve E7 is also opened. In this manner, when a water supply amount (usage amount) of the soft water supplied from the tap 111 is small, the remaining soft water that is not supplied passes through a circulation path 23a, and returns to the buffer tank 50.

Further, when the water to be treated in which the crystallized metal ion is suspended is fed into the separation unit 40, and is separated into the soft water and the crystallized metal ion, the valve E7 may be closed while opening the valve E2 and the valve E3. With this, the water to be treated in which the crystallized metal ion is suspended is fed into the separation unit 40. Then, the soft water after separation in the separation unit 40 passes through the treated-water feed channel 23, and is supplied directly to the water supply pipe 110.

Note that, when the water to be treated in which the crystallized metal ion is suspended is fed into the separation unit 40, and is separated into the soft water and the crystallized metal ion, the valve E2, the valve E3, and the valve E7 may also be opened. With this, when a usage amount of the soft water is small while supplying, directly from the treated-water feed channel 23 to the water supply pipe 110, the soft water after separation in the separation unit 40, the remaining soft water may return to the buffer tank 50 through the circulation path 23a.

Further, for example, the valve E1, the valve E2, and the valve E3 are opened, and the valve E4, the valve E5, the valve E6, and the valve E7 are closed. With this, treatment for the water to be treated can be performed in one pass.

With this configuration, the soft water can be generated without the buffer tank 50.

Note that, in the present embodiment, the temperature of the soft water obtained from the water softening device 1 is also preferably equal to or lower than 40 degrees Celsius, more preferably, equal to or lower than 30 degrees Celsius.

### (Third Embodiment)

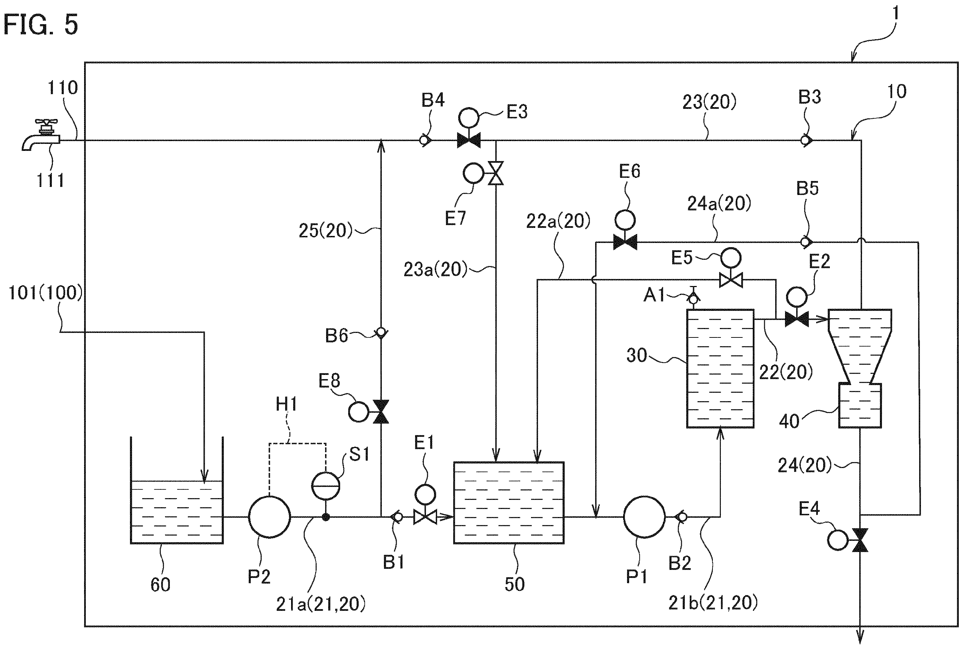

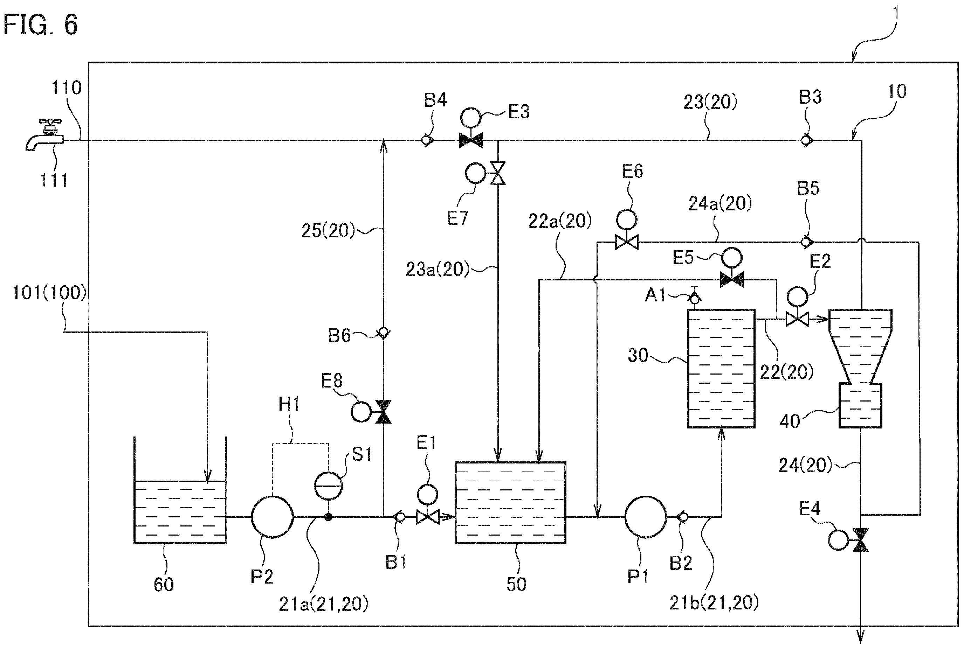

Next, with reference to FIG. 5 and FIG. 6, the water softening device 1 according to a third embodiment is described.

In the present embodiment, there is also exemplified the water softening device 1 of an point-of-entry (POE) type that is installed at an entrance of a construction such as a house and a building and is capable of supplying treated water being softened to the entire construction while performing treatment to water to be treated.

Further, in the present embodiment, the water softening device 1 also employs the water softening system 10 that softens the water to be treated by crystallizing a metal ion and separating the obtained crystal away from the water to be treated.

The water softening system 10 includes the water feed channel 20 through which the water to be treated flows, the crystallization unit 30 that causes the metal ion contained in the water to be treated to precipitate, and the separation unit 40 that separates the water to be treated having passed through the crystallization unit 30 into a crystal obtained through precipitation by the crystallization unit 30 and soft water.

Further, the crystallization unit 30 and the separation unit 40 are connected to the water feed channel 20 so that the crystallization unit 30 is positioned upstream and the separation unit 40 is positioned downstream. The configurations of the crystallization unit 30 and the separation unit 40 may be the same configurations as those in the first embodiment described above.

Further, in the present embodiment, the water feed channel 20 also includes the crystallization unit introduction channel 21 that is connected to the upstream side of the crystallization unit 30 and that is capable of introducing the water to be treated into the crystallization unit 30.

Here, in the present embodiment, the water softening system 10 includes a main tank 60 for storing the water to be treated, which is caused to flow into the feed channel being a pressure application system in a substantially sealed state. Further, the upstream side of the crystallization unit introduction channel 21 is connected to the main tank 60.

The main tank 60 is a tank for storing, as the water to be treated, the water taken out from the water-to-be-treated supply source 100 such as the clean water pipe 101.

Further, even when it is difficult to connect the water feed channel 20 directly to the clean water pipe 101, the water taken from the clean water pipe 101 can be softened, and can be supplied to the water supply pipe 110 in the construction by using the water softening device 1 as described above.

Further, in the present embodiment, the water softening system 10 also includes the buffer tank 50 that is connected to the water feed channel 20 at the position upstream of the crystallization unit 30 and stores the water to be treated. Therefore, in the present embodiment, the crystallization unit introduction channel 21 also includes the introduction channel 21a that is positioned upstream of the buffer tank 50 and introduces the water to be treated into the buffer tank 50. Moreover, the crystallization unit introduction channel 21 includes the introduction channel 21b that introduces the water to be treated, which is supplied from the buffer tank 50, into the crystallization unit 30.

Further, in the present embodiment, a pump (pressure raising means) P2 and the pressure sensor (pressure measuring means) S1 are connected to the introduction channel 21a at a position upstream of the check valve B1.

In the present embodiment, the pressure sensor S1 is electrically connected to a control unit (omitted in illustration) of the pump P2 via the wiring line HI, and a drive of the pump P2 is controlled based on the water pressure in the crystallization unit introduction channel 21, which is measured by the pressure sensor S1.

Further, in the present embodiment, the buffer tank 50 is also connected to the crystallization unit introduction channel 21 at the position downstream of the valve E1 and upstream of the pump PI. Note that, in the present embodiment, the pressure sensor S1 is not provided downstream of the pump P1.

Therefore, in the present embodiment, the pump P2, the pressure sensor S1, the check valve B1, the valve E1, the buffer tank 50, the pump (pressure raising means) PI, and the check valve B2 are connected to the crystallization unit introduction channel 21 in the stated order from upstream.

Further, the water feed channel 20 includes the separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30.

Moreover, the water feed channel 20 includes the circulation channel 22a capable of circulating the water to be treated, which is introduced into the separation unit introduction channel 22, in the buffer tank 50.

Further, the water feed channel 20 includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

Further, in the present embodiment, the water feed channel 20 also includes the circulation channel 23 a capable of circulating the soft water, which is introduced into the treated-water feed channel 23, in the buffer tank 50. Further, the water feed channel 20 includes the circulation channel 24a capable of circulating the soft water, which is introduced into the discharge channel 24, through the introduction channel 21b.

Here, in the present embodiment, the water feed channel 20 includes a bypass channel 25 that causes the water to be treated to flow out while bypassing the crystallization unit 30 and the separation unit 40.

The upstream side of the bypass channel 25 is connected to the middle of the introduction channel 21a, and the downstream side thereof is connected to the middle of the treated-water feed channel 23. Specifically, the upstream of the bypass channel 25 is connected to the introduction channel 21a at a position downstream of the pressure sensor S1 and upstream of the check valve B1. Meanwhile, the downstream side of the bypass channel 25 is connected to the treated-water feed channel 23 at a position downstream of the check valve B4.

Further, a valve E8 and a check valve B6 are connected to the bypass channel 25 in the stated order from upstream.

Even when the water softening system 10 is not operated normally, the water to be treated can be taken out from the tap 111 by providing the bypass channel 25 as described above.

Further, in the present embodiment, the air vent valve A1 is also mounted to the crystallization unit 30. The air vent valve A1 removes air in the water softening system 10. However, the mounting position of the air vent valve A1 is not limited to the crystallization unit 30, and may be variously selected such as the buffer tank 50 and the uppermost part of the water softening system 10.

Here, in the present embodiment, at least a part of the water feed channel 20 is also configured to function as the feed channel being a pressure application system in a substantially sealed state.

In the present embodiment, the feed channel being a pressure application system in a substantially sealed state is obtained by closing at least the valve E3, the valve E4 and the valve E8.

Specifically, first, the valve E3, the valve E4, and the valve E8 are closed, and hence a part of the space in the water feed channel 20 is obtained as a substantially sealed space. Further, under a state in which a part of the space in the water feed channel 20 is obtained as a substantially sealed space, the pump (pressure raising means) P2 is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the crystallization unit introduction channel 21 downstream of the pump P2, the entirety of the separation unit introduction channel 22, the treated-water feed channel 23 upstream of the valve E3, and the discharge channel 24 upstream of the valve E4 function as the feed channel being a pressure application system in a substantially sealed state.

Further, in the water feed channel 20, the entirety of the circulation channel 22a, the entirety of the circulation channel 23a, the entirety of the circulation channel 24a, and the bypass channel 25 upstream of the valve E8 function as the feed channel being a pressure application system in a substantially sealed state.

Further, the crystallization unit 30 and the separation unit 40 are connected to parts corresponding to the feed channel being a pressure application system in a substantially sealed state in the water feed channel 20. The internal space of the crystallization unit 30 and the internal space of the separation unit 40 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than the predetermined value. With this, the soft water can be supplied from all the water supply ports (such as the tap 111) provided in the construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 includes the pressure sensor (pressure measuring means) S1 that measures a pressure in the feed channel being a pressure application system in a substantially sealed state and the pump (pressure raising means) P2 that supplies water to the feed channel being a pressure application system in a substantially sealed state and raises a pressure.

Further, when the pressure in the feed channel being a pressure application system in a substantially sealed state, which is measured by the pressure sensor S1, is less than the predetermined value, the pump P2 is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump P2 is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 5, the valve E3, the valve E4, and the valve E8 are closed to obtain the feed channel being a pressure application system in a substantially sealed state. At the same time, the valve E2 and the valve E6 are closed to form a batch-type line for generating soft water in the feed channel being a pressure application system in a substantially sealed state. In this state, the valve E1, the valve E5, and the valve E7 are opened. Note that the valve E7 may be closed.

Further, crystallization of a metal ion continues until the water to be treated having predetermined hardness is obtained. In this state, for example, a circulation amount (circulation time period and circulation frequency) of the water to be treated between the buffer tank 50 and the crystallization unit 30 is set as appropriate. With this, adjustment can be performed to obtain a predetermined precipitation amount of the metal ion. Note that completion of crystallization treatment may be determined based on a time period in accordance with the volume of the buffer tank 50, or may be determined based on an output detected by a hardness sensor or a turbidity sensor.

Further, feeding of the water to be treated (circulation in the circulation channel) may be performed by operating the pump P1. In this case, the pump P1 also has a function as a liquid feeding means that circulates the water to be treated between the crystallization unit 30 and the buffer tank 50.

Further, when the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 6, the valve E3, the valve E4, and the valve E8 are closed to obtain the feed channel being a pressure application system in a substantially sealed state. At the same time, the valve E2 is opened to feed the water to be treated into the separation unit 40. In this state, the valve E5 is closed, and the valve E1, the valve E6, and the valve E7 are opened. Note that the valve E6 may remain closed.

Further, the water to be treated, which is fed into the separation unit 40, is separated into the soft water and the crystallized metal ion by centrifugal separation.

Note that a force of the water flow is not required so much when the water to be treated is caused to circulate for crystallization. However, when a cyclone type liquid-solid separator is used to perform centrifugal separation, a relatively large pressure and a relatively high flow rate are required.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump PI, or may be achieved by increasing an output of the pump P1 by inverter control or the like. When an output of the pump P1 is increased, the pump P1 also has a function as a forcibly feeding means that increases a water feed pressure and a flow rate of the water to be treated, which is fed into the separation unit 40, as compared to a pressure and a flow rate of the water to be treated that circulates between the crystallization unit 30 and the buffer tank 50.

Further, the soft water being liquid obtained through separation in the separation unit 40 is introduced into the treated-water feed channel 23, and the metal crystal being a solid substance is introduced into the discharge channel 24. In this state, the liquid (soft water), which is introduced into the discharge channel 24 together with the metal crystal before separation, passes through the circulation channel 24a, and returns to the channel where liquid-solid separation treatment is performed. Note that the metal crystal stored in the discharge channel 24 can be discharged to the outside of the water softening device 1 by opening the valve E4.

Meanwhile, the soft water introduced into the treated-water feed channel 23 passes through the circulation channel 23a, and is introduced into the buffer tank 50. Further, the water in the buffer tank 50 flows through (circulates in) the channel where liquid-solid separation treatment is performed. In this manner, the treated water that is subjected to softening (soft water) is stored in the buffer tank 50.

Further, the soft water stored in the buffer tank 50 is supplied from the tap 111 by opening the tap 111 connected to the water supply pipe 110 while opening the valve E3.

In the present embodiment, when the soft water is supplied from the tap 111, the valve E7 is also opened. In this manner, when a water supply amount (usage amount) of the soft water supplied from the tap 111 is small, the remaining soft water that is not supplied passes through the circulation path 23a, and returns to the buffer tank 50.

Further, when the water to be treated in which the crystallized metal ion is suspended is fed into the separation unit 40, and is separated into the soft water and the crystallized metal ion, the valve E7 may be closed while opening the valve E2 and the valve E3. With this, the water to be treated in which the crystallized metal ion is suspended is fed into the separation unit 40. Then, the soft water after separation in the separation unit 40 passes through the treated-water feed channel 23, and is supplied to the water supply pipe 110.

Note that, when the water to be treated in which the crystallized metal ion is suspended is fed into the separation unit 40, and is separated into the soft water and the crystallized metal ion, the valve E2, the valve E3, and the valve E7 may also be opened. With this, when a usage amount of the soft water is small while supplying, directly from the treated-water feed channel 23 to the water supply pipe 110, the soft water after separation in the separation unit 40, the remaining soft water may return to the buffer tank 50 through the circulation path 23a.

Further, for example, the valve E1, the valve E2, and the valve E3 are opened, and the valve E4, the valve E5, the valve E6, and the valve E7 are closed. With this, treatment for the water to be treated can be performed in one pass.

With this configuration, the soft water can be generated without the buffer tank 50.

Note that, in the present embodiment, the temperature of the soft water obtained from the water softening device 1 is also preferably equal to or lower than 40 degrees Celsius, more preferably, equal to or lower than 30 degrees Celsius.

### (Fourth Embodiment)

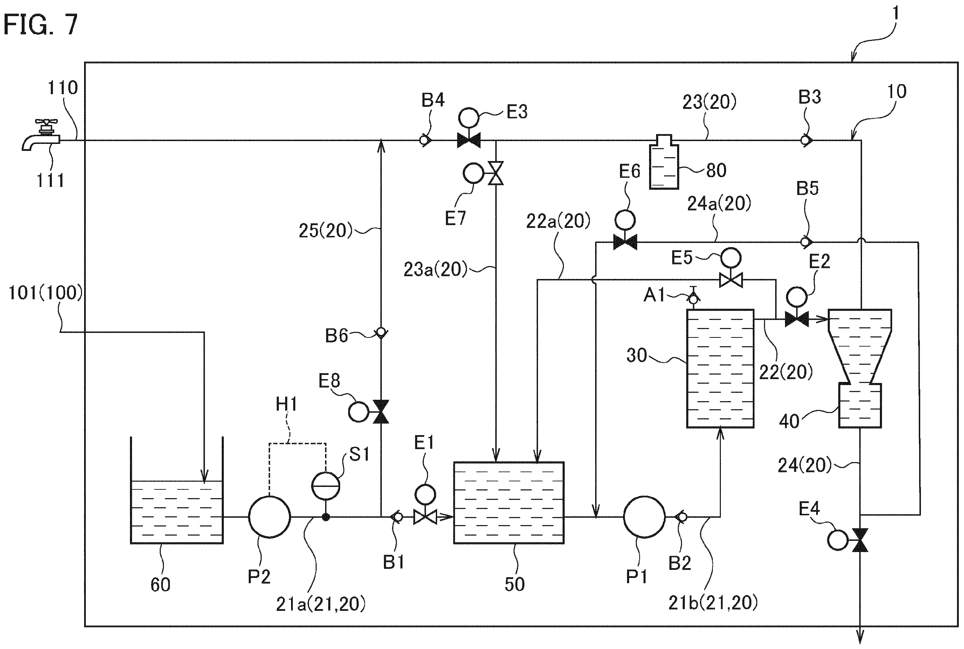

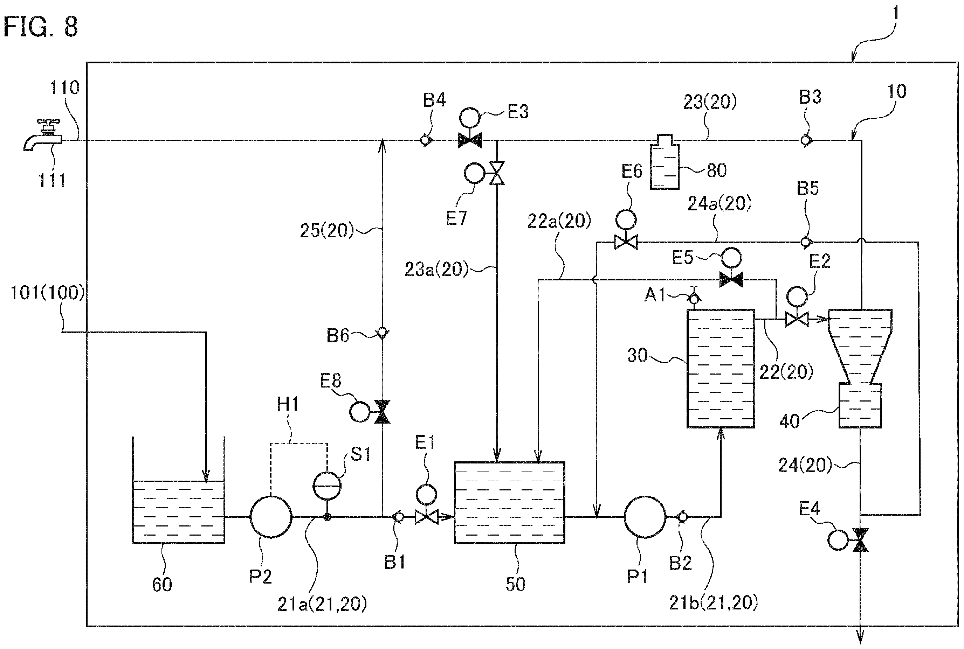

Next, with reference to FIG. 7 and FIG. 8, the water softening device 1 according to a fourth embodiment is described.

In the present embodiment, there is also exemplified the water softening device 1 of an point-of-entry (POE) type that is installed at an entrance of a construction such as a house and a building and is capable of supplying treated water being softened to the entire construction while performing treatment to water to be treated.

Further, in the present embodiment, the water softening device 1 also employs the water softening system 10 that softens the water to be treated by crystallizing a metal ion and separating the obtained crystal away from the water to be treated.

The water softening system 10 includes the water feed channel 20 through which the water to be treated flows, the crystallization unit 30 that causes the metal ion contained in the water to be treated to precipitate, and the separation unit 40 that separates the water to be treated having passed through the crystallization unit 30 into a crystal obtained through precipitation by the crystallization unit 30 and soft water.

Further, the crystallization unit 30 and the separation unit 40 are connected to the water feed channel 20 so that the crystallization unit 30 is positioned upstream and the separation unit 40 is positioned downstream. The configurations of the crystallization unit 30 and the separation unit 40 may be the same configurations as those in the first embodiment described above.

Further, in the present embodiment, the water feed channel 20 also includes the crystallization unit introduction channel 21 that is connected to the upstream side of the crystallization unit 30 and that is capable of introducing the water to be treated into the crystallization unit 30.

Further, in the present embodiment, the water softening system 10 also includes the main tank 60 for storing the water to be treated, which is caused to flow into the feed channel being a pressure application system in a substantially sealed state. Further, the upstream side of the crystallization unit introduction channel 21 is connected to the main tank 60.

The main tank 60 is a tank for storing, as the water to be treated, the water taken out from the water-to-be-treated supply source 100 such as the clean water pipe 101.

Further, even when it is difficult to connect the water feed channel 20 directly to the clean water pipe 101, the water taken from the clean water pipe 101 can be softened, and can be supplied to the water supply pipe 110 in the construction by using the water softening device 1 as described above.

Further, in the present embodiment, the water softening system 10 also includes the buffer tank 50 that is connected to the water feed channel 20 at the position upstream of the crystallization unit 30 and stores the water to be treated. Therefore, in the present embodiment, the crystallization unit introduction channel 21 also includes the introduction channel 21a that is positioned upstream of the buffer tank 50 and introduces the water to be treated into the buffer tank 50. Moreover, the crystallization unit introduction channel 21 includes the introduction channel 21b that introduces the water to be treated, which is supplied from the buffer tank 50, into the crystallization unit 30.

Further, in the present embodiment, the pump (pressure raising means) P2 and the pressure sensor (pressure measuring means) S1 are connected to the introduction channel 21a at the position upstream of the check valve B1.

In the present embodiment, the pressure sensor S1 is electrically connected to the control unit (omitted in illustration) of the pump P2 via the wiring line HI, and the drive of the pump P2 is controlled based on the water pressure in the crystallization unit introduction channel 21, which is measured by the pressure sensor S1.

Further, in the present embodiment, the buffer tank 50 is also connected to the crystallization unit introduction channel 21 at the position downstream of the valve E1 and upstream of the pump P1. Note that, in the present embodiment, the pressure sensor S1 is not provided downstream of the pump P1.

Therefore, in the present embodiment, the pump P2, the pressure sensor S1, the check valve B1, the valve E1, the buffer tank 50, the pump (pressure raising means) PI, and the check valve B2 are connected to the crystallization unit introduction channel 21 in the stated order from upstream.

Further, the water feed channel 20 includes the separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30.

Moreover, the water feed channel 20 includes the circulation channel 22a capable of circulating the water to be treated, which is introduced into the separation unit introduction channel 22, in the buffer tank 50.

Further, the water feed channel 20 includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

Here, in the present embodiment, the water softening system 10 includes a filter (second separation unit) 80 that removes a particle residue contained in the soft water after separation in the separation unit 40. In the present embodiment, the filter 80 is connected to the treated-water feed channel 23 at a position downstream of the check valve B3 and upstream of the valve E3. A publicly-known filter that has hitherto been used may be used as the filter 80 described above. Note that a cyclone type liquid-solid separator may be used as the second separation unit. Specifically, the second separation unit is only required to remove a particle residue contained in the soft water, and is not limited to a filter.

In this manner, in the present embodiment, the check valve B3, the filter (second separation unit) 80, the valve E3, and the check valve B4 are connected to the treated-water feed channel 23 in the stated order from upstream. In this state, it is preferred that the filter 80 be removably attached to the treated-water feed channel 23. With this, the filter can be washed and replaced easily, and performance degradation for removing a particle residue can be prevented more securely.

Further, in the present embodiment, the water feed channel 20 also includes the circulation channel 23a capable of circulating the soft water, which is introduced into the treated-water feed channel 23, in the buffer tank 50. Moreover, the water feed channel 20 includes the circulation channel 24a capable of circulating the soft water, which is introduced into the discharge channel 24, through the introduction channel 21b.

Further, in the present embodiment, the water feed channel 20 includes the bypass channel 25 that causes the water to be treated to flow out while bypassing the crystallization unit 30, the separation unit 40, and the filter 80.

The upstream side of the bypass channel 25 is connected to the middle of the introduction channel 21a, and the downstream side thereof is connected to the middle of the treated-water feed channel 23. Specifically, the upstream of the bypass channel 25 is connected to the introduction channel 21a at the position downstream of the pressure sensor S1 and upstream of the check valve B1. Meanwhile, the downstream side of the bypass channel 25 is connected to the treated-water feed channel 23 at the position downstream of the check valve B4.

Further, the valve E8 and the check valve B6 are connected to the bypass channel 25 in the stated order from upstream.

Even when the water softening system 10 is not operated normally, the water to be treated can be taken out from the tap 111 by providing the bypass channel 25 as described above.

Further, in the present embodiment, the air vent valve A1 is also mounted to the crystallization unit 30. The air vent valve A1 removes air in the water softening system 10. However, the mounting position of the air vent valve A1 is not limited to the crystallization unit 30, and may be variously selected such as the buffer tank 50 and the uppermost part of the water softening system 10.

Here, in the present embodiment, at least a part of the water feed channel 20 is also configured to function as the feed channel being a pressure application system in a substantially sealed state.

In the present embodiment, the feed channel being a pressure application system in a substantially sealed state is obtained by closing at least the valve E3, the valve E4 and the valve E8.

Specifically, first, the valve E3, the valve E4, and the valve E8 are closed, and hence a part of the space in the water feed channel 20 is obtained as a substantially sealed space. Further, under a state in which a part of the space in the water feed channel 20 is obtained as a substantially sealed space, the pump (pressure raising means) P2 is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the crystallization unit introduction channel 21 downstream of the pump P2, the entirety of the separation unit introduction channel 22, the treated-water feed channel 23 upstream of the valve E3, and the discharge channel 24 upstream of the valve E4 function as the feed channel being a pressure application system in a substantially sealed state.

Further, in the water feed channel 20, the entirety of the circulation channel 22a, the entirety of the circulation channel 23a, the entirety of the circulation channel 24a, and the bypass channel 25 upstream of the valve E8 function as the feed channel being a pressure application system in a substantially sealed state.

Further, the crystallization unit 30, the separation unit 40, and the filter 80 are connected to parts corresponding to the feed channel being a pressure application system in a substantially sealed state in the water feed channel 20. Therefore, the internal space of the crystallization unit 30, the internal space of the separation unit 40, and the internal space of the filter 80 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than the predetermined value. With this, the soft water can be supplied from all the water supply ports (such as the tap 111) provided in the construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 includes the pressure sensor (pressure measuring means) S1 that measures a pressure in the feed channel being a pressure application system in a substantially sealed state and the pump (pressure raising means) P2 that supplies water to the feed channel being a pressure application system in a substantially sealed state and raises a pressure.

Further, when the pressure in the feed channel being a pressure application system in a substantially sealed state, which is measured by the pressure sensor S1, is less than the predetermined value, the pump P2 is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump P2 is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 7, the valve E3, the valve E4, and the valve E8 are closed to obtain the feed channel being a pressure application system in a substantially sealed state. At the same time, the valve E2 and the valve E6 are closed to form a batch-type line for generating soft water in the feed channel being a pressure application system in a substantially sealed state. In this state, the valve E1, the valve E5, and the valve E7 are opened. Note that the valve E7 may be closed.

Further, crystallization of a metal ion continues until the water to be treated having predetermined hardness is obtained. In this state, for example, a circulation amount (circulation time period and circulation frequency) of the water to be treated between the buffer tank 50 and the crystallization unit 30 is set as appropriate. With this, adjustment can be performed to obtain a predetermined precipitation amount of the metal ion. Note that completion of crystallization treatment may be determined based on a time period in accordance with the volume of the buffer tank 50, or may be determined based on an output detected by a hardness sensor or a turbidity sensor.

Further, feeding of the water to be treated (circulation in the circulation channel) may be performed by operating the pump P1. In this case, the pump P1 also has a function as a liquid feeding means that circulates the water to be treated between the crystallization unit 30 and the buffer tank 50.

Further, when the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 8, the valve E3, the valve E4, and the valve E8 are closed to obtain the feed channel being a pressure application system in a substantially sealed state. At the same time, the valve E2 is opened to feed the water to be treated into the separation unit 40. In this state, the valve E5 is closed, and the valve E1, the valve E6, and the valve E7 are opened. Note that the valve E6 may remain closed.

Further, the water to be treated, which is fed into the separation unit 40, is separated into the soft water and the crystallized metal ion by centrifugal separation.

Note that a force of the water flow is not required so much when the water to be treated is caused to circulate for crystallization. However, when a cyclone type liquid-solid separator is used to perform centrifugal separation, a relatively large pressure and a relatively high flow rate are required.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump PI, or may be achieved by increasing an output of the pump P1 by inverter control or the like. When an output of the pump P1 is increased, the pump P1 also has a function as a forcibly feeding means that increases a water feed pressure and a flow rate of the water to be treated, which is fed into the separation unit 40, as compared to a pressure and a flow rate of the water to be treated that circulates between the crystallization unit 30 and the buffer tank 50.

Further, the soft water being liquid obtained through separation in the separation unit 40 is introduced into the treated-water feed channel 23, and the metal crystal being a solid substance is introduced into the discharge channel 24. In this state, the liquid (soft water), which is introduced into the discharge channel 24 together with the metal crystal before separation, passes through the circulation channel 24a, and returns to the channel where liquid-solid separation treatment is performed. Note that the metal crystal stored in the discharge channel 24 can be discharged to the outside of the water softening device 1 by opening the valve E4.

Meanwhile, the soft water, which is introduced into the treated-water feed channel 23, passes through the filter 80. With this, a particle residue that is still left after treatment in the separation unit 40 (for example, a relatively smaller crystallized metal ion) is removed from the soft water. After that, the soft water passes through the circulation channel 23a, and is introduced into the buffer tank 50. Further, the water in the buffer tank 50 flows through (circulates in) the channel where liquid-solid separation treatment is performed. In this manner, the treated water that is subjected to softening (soft water) is stored in the buffer tank 50.

Further, the soft water stored in the buffer tank 50 is supplied from the tap 111 by opening the tap 111 connected to the water supply pipe 110 while opening the valve E3.

In the present embodiment, when the soft water is supplied from the tap 111, the valve E7 is also opened. In this manner, when a water supply amount (usage amount) of the soft water supplied from the tap 111 is small, the remaining soft water that is not supplied passes through the circulation path 23a, and returns to the buffer tank 50.

Further, when the water to be treated in which the crystallized metal ion is suspended is fed into the separation unit 40, and is separated into the soft water and the crystallized metal ion, the valve E7 may be closed while opening the valve E2 and the valve E3. With this, the water to be treated in which the crystallized metal ion is suspended is fed into the separation unit 40. Then, the soft water after separation in the separation unit 40 passes through the treated-water feed channel 23, and is supplied to the water supply pipe 110.

Note that, when the water to be treated in which the crystallized metal ion is suspended is fed into the separation unit 40, and is separated into the soft water and the crystallized metal ion, the valve E2, the valve E3, and the valve E7 may also be opened. With this, when a usage amount of the soft water is small while supplying, directly from the treated-water feed channel 23 to the water supply pipe 110, the soft water after separation in the separation unit 40, the remaining soft water may return to the buffer tank 50 through the circulation path 23a.

Further, for example, the valve E1, the valve E2, and the valve E3 are opened, and the valve E4, the valve E5, the valve E6, and the valve E7 are closed. With this, treatment for the water to be treated can be performed in one pass.

With this configuration, the soft water can be generated without the buffer tank 50.

Note that, in the present embodiment, the temperature of the soft water obtained from the water softening device 1 is also preferably equal to or lower than 40 degrees Celsius, more preferably, equal to or lower than 30 degrees Celsius.

### (Fifth Embodiment)

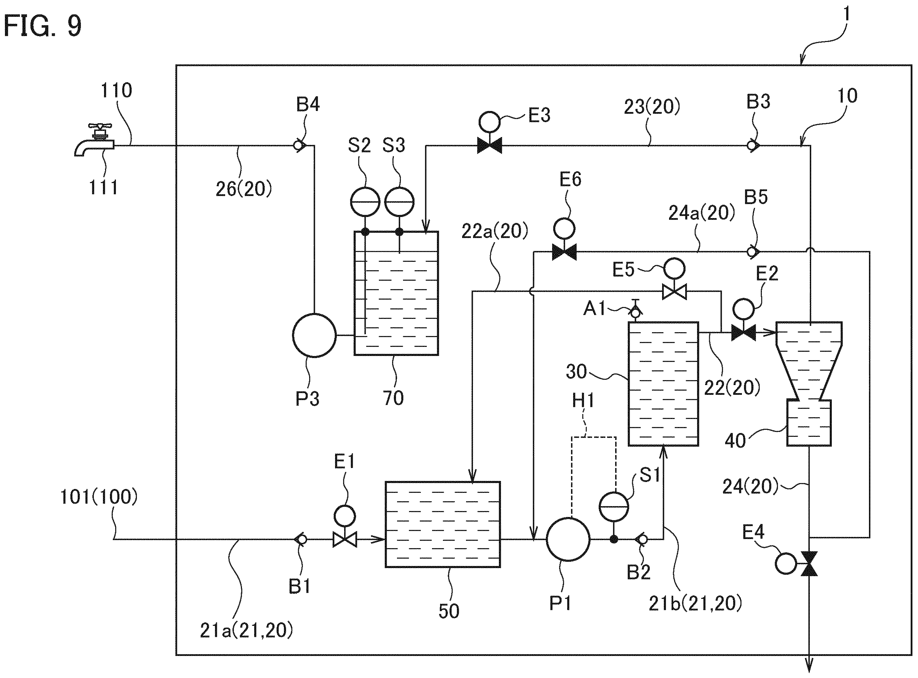

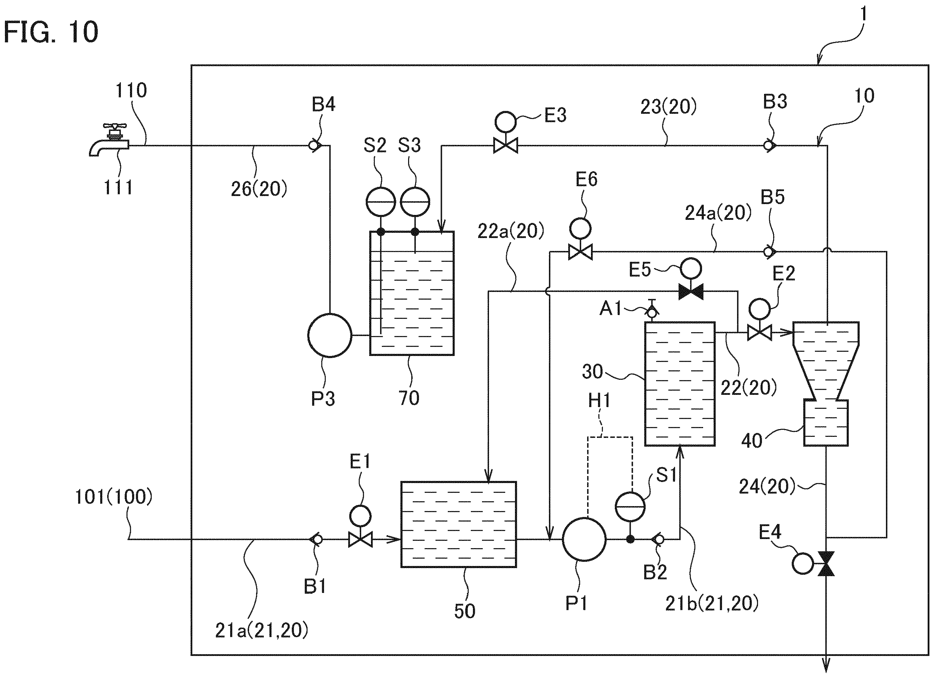

Next, with reference to FIG. 9 and FIG. 10, the water softening device 1 according to a fifth embodiment is described.

In the present embodiment, there is also exemplified the water softening device 1 of an point-of-entry (POE) type that is installed at an entrance of a construction such as a house and a building and is capable of supplying treated water being softened to the entire construction while performing treatment to water to be treated.

Further, in the present embodiment, the water softening device 1 also employs the water softening system 10 that softens the water to be treated by crystallizing a metal ion and separating the obtained crystal away from the water to be treated.

The water softening system 10 includes the water feed channel 20 through which the water to be treated flows, the crystallization unit 30 that causes the metal ion contained in the water to be treated to precipitate, and the separation unit 40 that separates the water to be treated having passed through the crystallization unit 30 into a crystal obtained through precipitation by the crystallization unit 30 and soft water.

Further, the crystallization unit 30 and the separation unit 40 are connected to the water feed channel 20 so that the crystallization unit 30 is positioned upstream and the separation unit 40 is positioned downstream. The configurations of the crystallization unit 30 and the separation unit 40 may be the same configurations as those in the first embodiment described above.

Further, in the present embodiment, the water feed channel 20 also includes the crystallization unit introduction channel 21 that is connected to the upstream side of the crystallization unit 30 and that is capable of introducing the water to be treated into the crystallization unit 30. The upstream side of the crystallization unit introduction channel 21 is also connected to the water-to-be-treated supply source 100 such as the clean water pipe 101. In this manner, in the present embodiment, the water softening device 1 also has a configuration in which the water feed channel 20 is directly connected to the clean water pipe 101.

Further, in the present embodiment, the water softening system 10 also includes the buffer tank 50 that is connected to the water feed channel 20 at the position upstream of the crystallization unit 30 and stores the water to be treated.

The buffer tank 50 is connected to the crystallization unit introduction channel 21 at the position downstream of the valve E1 and upstream of the pump P1.

Therefore, in the present embodiment, the check valve B1, the valve E1, the buffer tank 50, the pump (pressure raising means) PI, the pressure sensor S1, and the check valve B2 are connected to the crystallization unit introduction channel 21 in the stated order from upstream.

In this manner, in the present embodiment, the crystallization unit introduction channel 21 includes the introduction channel 21a that is positioned upstream of the buffer tank 50 and introduces the water to be treated into the buffer tank 50. Moreover, the crystallization unit introduction channel 21 includes the introduction channel 21b that introduces the water to be treated, which is supplied from the buffer tank 50, into the crystallization unit 30.

Further, the water feed channel 20 includes the separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30. Further, the valve E2 is connected to the separation unit introduction channel 22.

Moreover, the water feed channel 20 includes the circulation channel 22a capable of circulating the water to be treated, which is introduced into the separation unit introduction channel 22, in the buffer tank 50. The upstream side of the circulation channel 22a is connected to the middle of the separation unit introduction channel 22 while branching from the separation unit introduction channel 22, and the downstream side thereof is connected to the buffer tank 50.

In the present embodiment, the upstream side of the circulation channel 22a is also connected to the separation unit introduction channel 22 at the position upstream of the valve E2. Further, when the valve E2 is closed, the introduction channel 21b and the circulation channel 22a forms a circulation channel through which the water to be treated circulates between the buffer tank 50 and the crystallization unit 30. Further, the valve E5 is connected to the middle of the circulation channel 22a.

In this manner, in the present embodiment, when crystallization of the metal ion is performed, the water to be treated, which is stored in the buffer tank 50, is caused to circulate through the circulation channel under a state in which a certain amount of the water to be treated is stored in the buffer tank 50. In this manner, the time period required for crystallization of the metal ion in the water to be treated is increased so as to generate the soft water having the desired hardness.

In this manner, in the process of crystallization of the metal ion, the water to be treated is caused to circulate through the circulation channel. With this, the soft water having the desired hardness can be obtained more securely as compared to a case of crystallization of the metal ion in one pass.

Further, in the present embodiment, the water feed channel 20 also includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

In the present embodiment, the water softening system 10 includes a soft water tank 70 that stores the soft water after separation in the separation unit 40. Further, the downstream side of the treated-water feed channel 23 is connected to the soft water tank 70. The soft water after separation in the separation unit 40 passes through the treated-water feed channel 23, and is stored in the soft water tank 70.

In the present embodiment, the soft water tank 70 is provided with water level sensors that detect a water level of the soft water stored in the soft water tank 70. Specifically, the soft water tank 70 is provided with a low water level sensor S2 that detects lowering of a water level of the soft water stored in the soft water tank 70 and a high water level sensor S3 that detects rising of a water level of the soft water stored in the soft water tank 70.

Further, in the present embodiment, the water feed channel 20 includes a water supply channel 26 having an upstream side connected to the soft water tank 70. The downstream side of the water supply channel 26 is connected to the water supply pipe 110.

Further, in the present embodiment, the check valve B3 and the valve E3 are connected to the treated-water feed channel 23 in the stated order from upstream. Further, a pump P3 and the check valve B4 are connected to the water supply channel 26 in the stated order from upstream, and the downstream side of the water supply pipe 110 is connected to the tap 111.

Meanwhile, the valve E4 is connected to the discharge channel 24. When the valve E4 is closed, a metal crystal can be stored in the discharge channel 24. Further, when the valve E4 is opened, the metal crystal stored in the discharge channel 24 can be discharged to the outside of the water softening device 1.

Moreover, in the present embodiment, the water feed channel 20 includes the circulation channel 24a capable of circulating the soft water, which is introduced into the discharge channel 24, through the introduction channel 21b. The upstream side of the circulation channel 24a is connected to the middle of the discharge channel 24 while branching from the discharge channel 24, and the downstream thereof is connected to the introduction channel 21b at the position upstream of the pump P1.

In the present embodiment, the upstream side of the circulation channel 24a is connected to the discharge channel 24 at the position upstream of the valve E4. Further, under a state in which the valve E4 is closed to store the metal crystal in the discharge channel 24, the liquid (soft water), which is introduced into the discharge channel 24 together with the metal crystal before separation, returns to the channel where liquid-solid separation treatment is performed. Note that the check valve B5 and the valve E6 are connected to the middle of the circulation channel 24a in the stated order from upstream.

In this manner, in the present embodiment, the liquid (soft water), which is introduced into the discharge channel 24 together with the metal crystal before separation, returns to the channel where liquid-solid separation treatment is performed. In this manner, the generated soft water can be prevented from being discharged from the discharge channel 24 to the outside of the water softening device 1.

Further, in the present embodiment, the air vent valve A1 is also mounted to the crystallization unit 30. The air vent valve A1 removes air in the water softening system 10. However, the mounting position of the air vent valve A1 is not limited to the crystallization unit 30, and may be variously selected such as the buffer tank 50 and the uppermost part of the water softening system 10.

Here, in the present embodiment, at least a part of the water feed channel 20 is also configured to function as the feed channel being a pressure application system in a substantially sealed state.

In the present embodiment, the feed channel being a pressure application system in a substantially sealed state is obtained by closing at least the valve E3 and the valve E4.

Specifically, first, the valve E3 and the valve E4 are closed, and hence a part of the space in the water feed channel 20 is obtained as a substantially sealed space. Further, under a state in which a part of the space in the water feed channel 20 is obtained as a substantially sealed space, the pump (pressure raising means) P1 is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the introduction channel 21b downstream of the pump PI, the entirety of the separation unit introduction channel 22, the treated-water feed channel 23 upstream of the valve E3, and the discharge channel 24 upstream of the valve E4 function as the feed channel being a pressure application system in a substantially sealed state.

Further, in the water feed channel 20, the entirety of the circulation channel 22a and the entirety of the circulation channel 24a also function as the feed channel being a pressure application system in a substantially sealed state.

Further, the crystallization unit 30 and the separation unit 40 are connected to parts corresponding to the feed channel being a pressure application system in a substantially sealed state in the water feed channel 20. The internal space of the crystallization unit 30 and the internal space of the separation unit 40 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than the predetermined value. With this, the soft water can be supplied from all the water supply ports (such as the tap 111) provided in the construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 also includes the pressure sensor (pressure measuring means) S1 that measures a pressure in the feed channel being a pressure application system in a substantially sealed state and the pump (pressure raising means) P1 that supplies water to the feed channel being a pressure application system in a substantially sealed state and raises a pressure.

Further, when the pressure in the feed channel being a pressure application system in a substantially sealed state, which is measured by the pressure sensor S1, is less than the predetermined value, the pump P1 is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump P1 is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

In the present embodiment, the pressure sensor S1 is electrically connected to the control unit (omitted in illustration) of the pump P1 via the wiring line HI, and a drive of the pump P1 is controlled based on the water pressure in the crystallization unit introduction channel 21, which is measured by the pressure sensor S1.

Note that, in the present embodiment, there is also employed the configuration in which the water feed channel 20 is directly connected to the clean water pipe 101. Thus, the pressure in the feed channel being a pressure application system in a substantially sealed state can be equal to or greater than the predetermined value in some cases, due to the water to be treated, which is supplied from the clean water pipe 101 into the water feed channel 20. Therefore, in such a case, the pump P1 functioning as a pressure raising means may not be provided. When the pump P1 is not provided, the entirety of the crystallization unit introduction channel 21 also functions as the feed channel being a pressure application system in a substantially sealed state.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 9, the valve E3 and the valve E4 are closed to obtain the feed channel being a pressure application system in a substantially sealed state. At the same time, the valve E2 and the valve E6 are closed to form a batch-type line for generating soft water in the feed channel being a pressure application system in a substantially sealed state. In this state, the valve E1 and the valve E5 are opened.

Further, crystallization of a metal ion continues until the water to be treated having predetermined hardness is obtained. In this state, for example, a circulation amount (circulation time period and circulation frequency) of the water to be treated between the buffer tank 50 and the crystallization unit 30 is set as appropriate. With this, adjustment can be performed to obtain a predetermined precipitation amount of the metal ion. Note that completion of crystallization treatment may be determined based on a time period in accordance with the volume of the buffer tank 50, or may be determined based on an output detected by a hardness sensor or a turbidity sensor.

Further, feeding of the water to be treated (circulation in the circulation channel) may be performed by operating the pump P1. In this case, the pump P1 also has a function as a liquid feeding means that circulates the water to be treated between the crystallization unit 30 and the buffer tank 50.

Further, when the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 10, the valve E2 and the valve E3 are opened under a state in which the valve E4 is closed. With this, the water to be treated is fed into the separation unit 40, and the soft water obtained through separation in the separation unit 40 passes through the treated-water feed channel 23, and is supplied to the water supply pipe 110. In this state, the valve E5 is closed, and the valve E1 and the valve E6 is opened. Note that the valve E6 may remain closed.

Further, the water to be treated, which is fed into the separation unit 40, is separated into the soft water and the crystallized metal ion by centrifugal separation.

Note that a force of the water flow is not required so much when the water to be treated is caused to circulate for crystallization. However, when a cyclone type liquid-solid separator is used to perform centrifugal separation, a relatively large pressure and a relatively high flow rate are required.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump PI, or may be achieved by increasing an output of the pump P1 by inverter control or the like. When an output of the pump P1 is increased, the pump P1 also has a function as a forcibly feeding means that increases a water feed pressure and a flow rate of the water to be treated, which is fed into the separation unit 40, as compared to a pressure and a flow rate of the water to be treated that circulates between the crystallization unit 30 and the buffer tank 50.

Further, the soft water being liquid obtained through separation in the separation unit 40 is introduced into the treated-water feed channel 23, and the metal crystal being a solid substance is introduced into the discharge channel 24. In this state, the liquid (soft water), which is introduced into the discharge channel 24 together with the metal crystal before separation, passes through the circulation channel 24a, and returns to the channel where liquid-solid separation treatment is performed. Note that the metal crystal stored in the discharge channel 24 can be discharged to the outside of the water softening device 1 by opening the valve E4.

Meanwhile, the soft water, which is introduced into the treated-water feed channel 23, passes through the circulation channel 23a, and is introduced into the soft water tank 70.

Further, the above-mentioned operations are repeated until the soft water tank 70 is filled with the water. In the present embodiment, when the high water level sensor S3 detects that the liquid surface of the soft water in the soft water tank 70 rises to a predetermined water level (maximum water level), it is determined that the soft water tank 70 is filled with the water. Then, supply of the soft water into the soft water tank 70 is stopped.

Further, the soft water stored in the soft water tank 70 is supplied from the tap 111 by opening the tap 111 connected to the water supply pipe 110 while operating the pump P3.

Note that, in the present embodiment, the temperature of the soft water obtained from the water softening device 1 is also preferably equal to or lower than 40 degrees Celsius, more preferably, equal to or lower than 30 degrees Celsius.

Here, as described above, the soft water tank 70 according to the present embodiment is provided with the low water level sensor S2 that detects lowering of a water level of the soft water stored in the soft water tank 70, in addition to the high water level sensor S3.

The low water level sensor S2 is a sensor that detects the liquid surface of the soft water in the soft water tank 70 is lower than a predetermined water level (minimum water level).

Here, in the present embodiment, when the soft water in the soft water tank 70 is used, and the water level of the soft water stored in the soft water tank 70 is lowered, the water softening device 1 is activated to replenish the soft water tank 70 with the soft water.

Thus, at the time of normal use, the liquid surface of the soft water in the soft water tank 70 is shifted between the minimum water level and the maximum water level.

However, when a large amount of the soft water is used at one time, and generation of the soft water cannot catch up, or when the water softening system 10 is not activated due to a certain defect, the liquid surface of the soft water in the soft water tank 70 may be lower than the minimum water level in some cases.

Further, when the water softening device 1 is used under a state in which the liquid surface of the soft water in the soft water tank 70 is lower than the minimum water level, there may be a risk that the soft water in the soft water tank 70 runs out and no water is taken out from the tap 111.

In this manner, in the water softening device 1 in which the generated soft water is stored in the soft water tank 70 to supply the soft water stored in the soft water tank 70, there may be a risk that stable water supply cannot be performed.

In view of this, in the present embodiment, even when the water softening device 1 includes the soft water tank 70, water can be supplied more stably.

Specifically, when the water level of the soft water stored in the soft water tank 70 is lower than the predetermined water level (minimum water level), water having a hardness level higher than that of the soft water after separation in the separation unit 40 can be supplied.

In the present embodiment, in the feed channel being a pressure application system in a substantially sealed state, a batch-type line for generating soft water is formed. Further, the water to be treated passes through the batch-type line for generating soft water for a plurality of times, and thus the soft water stored in the soft water tank 70 at the time of normal treatment has predetermined hardness.

Here, in the present embodiment, when the water level of the soft water stored in the soft water tank 70 is lower than the predetermined water level (minimum water level), the water to be treated passes through the batch-type line for generating soft water in one pass.

Specifically, when the low water level sensor S2 detects that the water level of the soft water stored in the soft water tank 70 is lower than the predetermined water level (minimum water level), the water to be treated passes through the batch-type line for generating soft water in one pass.

In this manner, water having a hardness level higher than that of the soft water generated through normal treatment is supplied into the soft water tank 70. With this, water can be supplied from the tap 111 or the like in a more stable manner.

### (Sixth Embodiment)

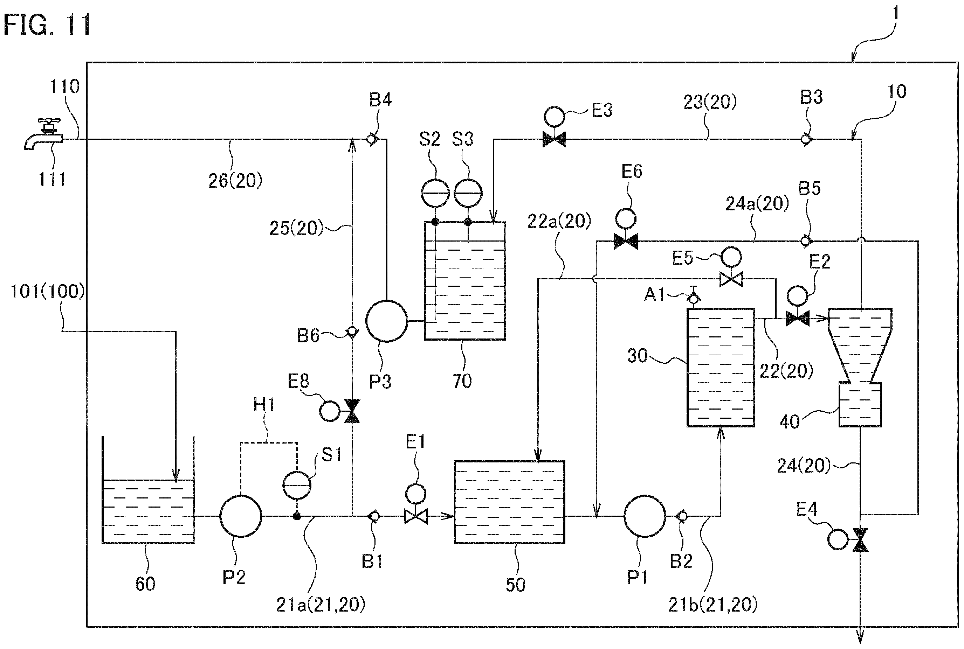

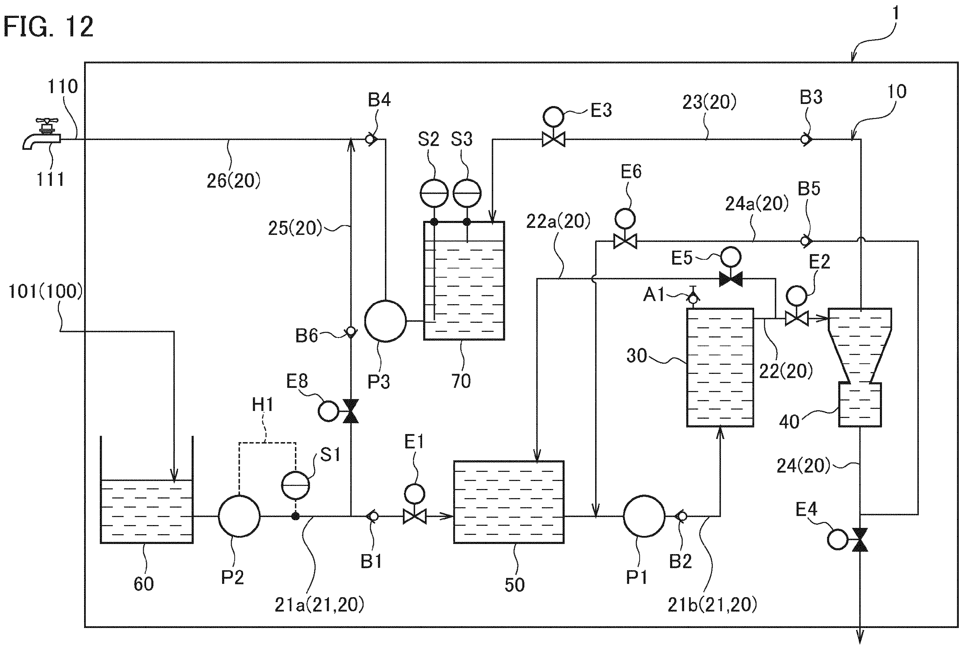

Next, with reference to FIG. 11 and FIG. 12, the water softening device 1 according to a sixths embodiment is described.

In the present embodiment, there is also exemplified the water softening device 1 of an point-of-entry (POE) type that is installed at an entrance of a construction such as a house and a building and is capable of supplying treated water being softened to the entire construction while performing treatment to water to be treated.

Further, in the present embodiment, the water softening device 1 also employs the water softening system 10 that softens the water to be treated by crystallizing a metal ion and separating the obtained crystal away from the water to be treated.

The water softening system 10 includes the water feed channel 20 through which the water to be treated flows, the crystallization unit 30 that causes the metal ion contained in the water to be treated to precipitate, and the separation unit 40 that separates the water to be treated having passed through the crystallization unit 30 into a crystal obtained through precipitation by the crystallization unit 30 and soft water.

Further, the crystallization unit 30 and the separation unit 40 are connected to the water feed channel 20 so that the crystallization unit 30 is positioned upstream and the separation unit 40 is positioned downstream. The configurations of the crystallization unit 30 and the separation unit 40 may be the same configurations as those in the first embodiment described above.

Further, in the present embodiment, the water feed channel 20 also includes the crystallization unit introduction channel 21 that is connected to the upstream side of the crystallization unit 30 and that is capable of introducing the water to be treated into the crystallization unit 30.

Here, in the present embodiment, the water softening system 10 includes the main tank 60 for storing the water to be treated, which is caused to flow into the feed channel being a pressure application system in a substantially sealed state. Further, the upstream side of the crystallization unit introduction channel 21 is connected to the main tank 60.

The main tank 60 is a tank for storing, as the water to be treated, the water taken out from the water-to-be-treated supply source 100 such as the clean water pipe 101.

Further, even when it is difficult to connect the water feed channel 20 directly to the clean water pipe 101, the water taken from the clean water pipe 101 can be softened, and can be supplied to the water supply pipe 110 in the construction by using the water softening device 1 as described above.

Further, in the present embodiment, the water softening system 10 also includes the buffer tank 50 that is connected to the water feed channel 20 at the position upstream of the crystallization unit 30 and stores the water to be treated. Therefore, in the present embodiment, the crystallization unit introduction channel 21 also includes the introduction channel 21a that is positioned upstream of the buffer tank 50 and introduces the water to be treated into the buffer tank 50. Moreover, the crystallization unit introduction channel 21 includes the introduction channel 21b that introduces the water to be treated, which is supplied from the buffer tank 50, into the crystallization unit 30.

Further, in the present embodiment, the pump (pressure raising means) P2 and the pressure sensor (pressure measuring means) S1 are connected to the introduction channel 21a at the position upstream of the check valve B1.

In the present embodiment, the pressure sensor S1 is electrically connected to the control unit (omitted in illustration) of the pump P2 via the wiring line HI, and the drive of the pump P2 is controlled based on the water pressure in the crystallization unit introduction channel 21, which is measured by the pressure sensor S1.

Further, in the present embodiment, the buffer tank 50 is also connected to the crystallization unit introduction channel 21 at the position downstream of the valve E1 and upstream of the pump P1. Note that, in the present embodiment, the pressure sensor S1 is not provided downstream of the pump P1.

Therefore, in the present embodiment, the pump P2, the pressure sensor S1, the check valve B1, the valve E1, the buffer tank 50, the pump (pressure raising means) P1, and the check valve B2 are connected to the crystallization unit introduction channel 21 in the stated order from upstream.

Further, the water feed channel 20 includes the separation unit introduction channel 22 that is connected to the downstream side of the crystallization unit 30 and the upstream side of the separation unit 40 and that is capable of introducing, into the separation unit 40, the water to be treated after the metal ion is crystallized in the crystallization unit 30. Further, the valve E2 is connected to the separation unit introduction channel 22.

Moreover, the water feed channel 20 includes the circulation channel 22a capable of circulating the water to be treated, which is introduced into the separation unit introduction channel 22, in the buffer tank 50. The upstream side of the circulation channel 22a is connected to the middle of the separation unit introduction channel 22 while branching from the separation unit introduction channel 22, and the downstream side thereof is connected to the buffer tank 50.

In the present embodiment, the upstream side of the circulation channel 22a is also connected to the separation unit introduction channel 22 at the position upstream of the valve E2. Further, when the valve E2 is closed, the introduction channel 21b and the circulation channel 22a forms a circulation channel through which the water to be treated circulates between the buffer tank 50 and the crystallization unit 30. Further, the valve E5 is connected to the middle of the circulation channel 22a.

In this manner, in the present embodiment, when crystallization of the metal ion is performed, the water to be treated, which is stored in the buffer tank 50, is caused to circulate through the circulation channel under a state in which a certain amount of the water to be treated is stored in the buffer tank 50. In this manner, the time period required for crystallization of the metal ion in the water to be treated is increased so as to generate the soft water having the desired hardness.

In this manner, in the process of crystallization of the metal ion, the water to be treated is caused to circulate through the circulation channel. With this, the soft water having the desired hardness can be obtained more securely as compared to a case of crystallization of the metal ion in one pass.

Further, in the present embodiment, the water feed channel 20 also includes the treated-water feed channel 23 that is connected to the downstream side of the separation unit 40 and allows the treated water to be introduced thereinto and the discharge channel 24 that is connected to the downstream side of the separation unit 40 and allows the metal crystal to be introduced thereinto.

In the present embodiment, the water softening system 10 includes the soft water tank 70 that stores the soft water after separation in the separation unit 40. Further, the downstream side of the treated-water feed channel 23 is connected to the soft water tank 70. The soft water after separation in the separation unit 40 passes through the treated-water feed channel 23, and is stored in the soft water tank 70.

In the present embodiment, the soft water tank 70 is provided with the water level sensors that detect a water level of the soft water stored in the soft water tank 70. Specifically, the soft water tank 70 is provided with the low water level sensor S2 that detects lowering of a water level of the soft water stored in the soft water tank 70 and the high water level sensor S3 that detects rising of a water level of the soft water stored in the soft water tank 70.

Further, in the present embodiment, the water feed channel 20 includes the water supply channel 26 having an upstream side connected to the soft water tank 70. The downstream side of the water supply channel 26 is connected to the water supply pipe 110.

Further, in the present embodiment, the check valve B3 and the valve E3 are connected to the treated-water feed channel 23 in the stated order from upstream. Further, the pump P3 and the check valve B4 are connected to the water supply channel 26 in the stated order from upstream, and the downstream side of the water supply pipe 110 is connected to the tap 111.

Meanwhile, the valve E4 is connected to the discharge channel 24. When the valve E4 is closed, a metal crystal can be stored in the discharge channel 24. Further, when the valve E4 is opened, the metal crystal stored in the discharge channel 24 can be discharged to the outside of the water softening device 1.

Moreover, in the present embodiment, the water feed channel 20 includes the circulation channel 24a capable of circulating the soft water, which is introduced into the discharge channel 24, through the introduction channel 21b. The upstream side of the circulation channel 24a is connected to the middle of the discharge channel 24 while branching from the discharge channel 24, and the downstream thereof is connected to the introduction channel 21b at the position upstream of the pump P1.

In the present embodiment, the upstream side of the circulation channel 24a is connected to the discharge channel 24 at the position upstream of the valve E4. Further, under a state in which the valve E4 is closed to store the metal crystal in the discharge channel 24, the liquid (soft water), which is introduced into the discharge channel 24 together with the metal crystal before separation, returns to the channel where liquid-solid separation treatment is performed. Note that the check valve B5 and the valve E6 are connected to the middle of the circulation channel 24a in the stated order from upstream.

In this manner, in the present embodiment, the liquid (soft water), which is introduced into the discharge channel 24 together with the metal crystal before separation, returns to the channel where liquid-solid separation treatment is performed. In this manner, the generated soft water can be prevented from being discharged from the discharge channel 24 to the outside of the water softening device 1.

Further, in the present embodiment, the water feed channel 20 includes the bypass channel 25 that causes the water to be treated to flow out while bypassing the crystallization unit 30 and the separation unit 40.

The upstream side of the bypass channel 25 is connected to the middle of the introduction channel 21a, and the downstream side thereof is connected to the middle of the water supply channel 26. Specifically, the upstream of the bypass channel 25 is connected to the introduction channel 21a at the position downstream of the pressure sensor S1 and upstream of the check valve B1. Meanwhile, the downstream side of the bypass channel 25 is connected to the water supply channel 26 at a position downstream of the check valve B4.

Further, the valve E8 and the check valve B6 are connected to the bypass channel 25 in the stated order from upstream.

Even when the water softening system 10 is not operated normally, the water to be treated can be taken out from the tap 111 by providing the bypass channel 25 as described above.

Further, in the present embodiment, the air vent valve A1 is also mounted to the crystallization unit 30. The air vent valve A1 removes air in the water softening system 10. However, the mounting position of the air vent valve A1 is not limited to the crystallization unit 30, and may be variously selected such as the buffer tank 50 and the uppermost part of the water softening system 10.

Here, in the present embodiment, at least a part of the water feed channel 20 is also configured to function as the feed channel being a pressure application system in a substantially sealed state.

In the present embodiment, the feed channel being a pressure application system in a substantially sealed state is obtained by closing at least the valve E3, the valve E4 and the valve E8.

Specifically, first, the valve E3, the valve E4, and the valve E8 are closed, and hence a part of the space in the water feed channel 20 is obtained as a substantially sealed space. Further, under a state in which a part of the space in the water feed channel 20 is obtained as a substantially sealed space, the pump (pressure raising means) P2 is activated, and water (water to be treated) is supplied to the substantially sealed space. With this, a pressure (water pressure) in the substantially sealed space is raised. In this manner, at least a part of the water feed channel 20 functions as the feed channel being a pressure application system in a substantially sealed state.

In the present embodiment, in the water feed channel 20, the crystallization unit introduction channel 21 downstream of the pump P2, the entirety of the separation unit introduction channel 22, the treated-water feed channel 23 upstream of the valve E3, and the discharge channel 24 upstream of the valve E4 function as the feed channel being a pressure application system in a substantially sealed state.

Further, in the water feed channel 20, the entirety of the circulation channel 22a, the entirety of the circulation channel 24a, and the bypass channel 25 upstream of the valve E8 also function as the feed channel being a pressure application system in a substantially sealed state.

Further, the crystallization unit 30 and the separation unit 40 are connected to parts corresponding to the feed channel being a pressure application system in a substantially sealed state in the water feed channel 20. The internal space of the crystallization unit 30 and the internal space of the separation unit 40 also constitute a part of the pressure application system in a substantially sealed state.

In this manner, at least a part of the water feed channel 20 is configured to function as the feed channel being a pressure application system in a substantially sealed state, and thus soft water can be supplied from the tap 111 arranged at a high position such as a second floor of a construction. Further, the water softening system 10 is obtained as the pressure application system in a substantially sealed state, and thus it can be expected that a problem caused by entry of foreign matters from the outside can be suppressed.

In this case, it is preferred that a pressure (water pressure) in the feed channel being a pressure application system in a substantially sealed state be equal to or greater than the predetermined value. With this, the soft water can be supplied from all the water supply ports (such as the tap 111) provided in the construction. Further, it is preferred that the pressure (water pressure) in the feed channel being a pressure application system in a substantially sealed state be kept at a substantially constant value. With this, a water pressure of the soft water supplied from the water supply ports (such as the tap 111) can be stabilized.

In view of this, in the present embodiment, the water softening system 10 also includes the pressure sensor (pressure measuring means) S1 that measures a pressure in the feed channel being a pressure application system in a substantially sealed state, and the pump (pressure raising means) P2 that supplies water to the feed channel being a pressure application system in a substantially sealed state and raises a pressure.

Further, when the pressure in the feed channel being a pressure application system in a substantially sealed state, which is measured by the pressure sensor S1, is less than the predetermined value, the pump P2 is operated to increase the pressure in the feed channel being a pressure application system in a substantially sealed state.

Further, when the pressure in the feed channel being a pressure application system in a substantially sealed state, which is measured by the pressure sensor S1, is equal to or greater than the predetermined value, the pump P2 is stopped to prevent excessive increase of the pressure in the feed channel being a pressure application system in a substantially sealed state.

It is preferred that the predetermined value be set to a value greater than a minimum pressure that allows soft water to be supplied from all the water supply ports (such as the tap 111) in the construction to which the water softening device 1 is provided.

Further, the water softening device 1 having the configuration as described is used, and the water to be treated is introduced into the crystallization unit 30 under a state in which at least a part of the water feed channel 20 functions as the feed channel being a pressure application system in a substantially sealed state. With this, a metal ion is crystallized by the crystallization unit 30.

In the present embodiment, as illustrated in FIG. 11, the valve E3, the valve E4, and the valve E8 are closed to obtain the feed channel being a pressure application system in a substantially sealed state. At the same time, the valve E2 and the valve E6 are closed to form a batch-type line for generating soft water in the feed channel being a pressure application system in a substantially sealed state. In this state, the valve E1 and the valve E5 are opened.

Further, crystallization of a metal ion continues until the water to be treated having predetermined hardness is obtained. In this state, for example, a circulation amount (circulation time period and circulation frequency) of the water to be treated between the buffer tank 50 and the crystallization unit 30 is set as appropriate. With this, adjustment can be performed to obtain a predetermined precipitation amount of the metal ion. Note that completion of crystallization treatment may be determined based on a time period in accordance with the volume of the buffer tank 50, or may be determined based on an output detected by a hardness sensor or a turbidity sensor.

Further, feeding of the water to be treated (circulation in the circulation channel) may be performed by operating the pump P1. In this case, the pump P1 also has a function as a liquid feeding means that circulates the water to be treated between the crystallization unit 30 and the buffer tank 50.

Further, when the predetermined amount of the metal ion precipitates, the water to be treated in which the crystallized metal ion is suspended is fed into the separation unit 40, and is separated into soft water and the crystallized metal ion.

In the present embodiment, as illustrated in FIG. 12, under a state in which the valve E4 and the valve E8 are closed, the valve E2 and the valve E3 are opened. With this, the water to be treated is fed into the separation unit 40. Further, the soft water after separation in the separation unit 40 passes through the treated-water feed channel 23, and is supplied to the water supply pipe 110. In this state, the valve E5 is closed, and the valve E1 and the valve E6 are opened. Note that the valve E6 may remain closed.

Further, the water to be treated, which is fed into the separation unit 40, is separated into the soft water and the crystallized metal ion by centrifugal separation.

Note that a force of the water flow is not required so much when the water to be treated is caused to circulate for crystallization. However, when a cyclone type liquid-solid separator is used to perform centrifugal separation, a relatively large pressure and a relatively high flow rate are required.

Thus, when a cyclone type liquid-solid separator is used to perform centrifugal separation, it is preferred that the water to be treated, which is supplied into the separation unit 40, have a higher flow rate and a larger pressure.

The configuration described above may be achieved by using another pump (omitted in illustration) in addition to the pump P1, or may be achieved by increasing an output of the pump P1 by inverter control or the like. When an output of the pump P1 is increased, the pump P1 also has a function as a forcibly feeding means that increases a water feed pressure and a flow rate of the water to be treated, which is fed into the separation unit 40, as compared to a pressure and a flow rate of the water to be treated that circulates between the crystallization unit 30 and the buffer tank 50.

Further, the soft water being liquid obtained through separation in the separation unit 40 is introduced into the treated-water feed channel 23, and the metal crystal being a solid substance is introduced into the discharge channel 24. In this state, the liquid (soft water), which is introduced into the discharge channel 24 together with the metal crystal before separation, passes through the circulation channel 24a, and returns to the channel where liquid-solid separation treatment is performed. Note that the metal crystal stored in the discharge channel 24 can be discharged to the outside of the water softening device 1 by opening the valve E4.

Meanwhile, the soft water, which is introduced into the treated-water feed channel 23, passes through the circulation channel 23a, and is introduced into the soft water tank 70.

Further, the above-mentioned operations are repeated until the soft water tank 70 is filled with the water. In the present embodiment, when the high water level sensor S3 detects that the liquid surface of the soft water in the soft water tank 70 rises to the predetermined water level (maximum water level), it is determined that the soft water tank 70 is filled with the water. Then, supply of the soft water into the soft water tank 70 is stopped.

Further, the soft water stored in the soft water tank 70 is supplied from the tap 111 by opening the tap 111 connected to the water supply pipe 110 while operating the pump P3.

Note that, in the present embodiment, the temperature of the soft water obtained from the water softening device 1 is also preferably equal to or lower than 40 degrees Celsius, more preferably, equal to or lower than 30 degrees Celsius.

Here, in the present embodiment, when the soft water in the soft water tank 70 is used, and the water level of the soft water stored in the soft water tank 70 is lowered, the water softening device 1 is also activated to replenish the soft water tank 70 with the soft water.

Further, even when the water softening device 1 includes the soft water tank 70, water can be supplied more stably.

Specifically, when the water level of the soft water stored in the soft water tank 70 is lower than the predetermined water level (minimum water level), water having a hardness level higher than that of the soft water after separation in the separation unit 40 can be supplied.

In the present embodiment, in the feed channel being a pressure application system in a substantially sealed state, a batch-type line for generating soft water is formed. Further, the water to be treated passes through the batch-type line for generating soft water for a plurality of times, and thus the soft water stored in the soft water tank 70 at the time of normal treatment has predetermined hardness.

Here, in the present embodiment, when the water level of the soft water stored in the soft water tank 70 is lower than the predetermined water level (minimum water level), the water to be treated passes through the batch-type line for generating soft water in one pass.

Specifically, when the low water level sensor S2 detects that the water level of the soft water stored in the soft water tank 70 is lower than the predetermined water level (minimum water level), the water to be treated passes through the batch-type line for generating soft water in one pass.

In this manner, water having a hardness level higher than that of the soft water generated through normal treatment is supplied into the soft water tank 70. With this, water can be supplied from the tap 111 or the like in a more stable manner.

Further, in the present embodiment, when the water level of the soft water stored in the soft water tank 70 is lower than the predetermined water level (minimum water level), the water to be treated may pass through the bypass channel 25.

Specifically, when the low water level sensor S2 detects that the water level of the soft water stored in the soft water tank 70 is lower than the predetermined water level (minimum water level), the valve E8 is opened while closing the valve E1. With this, the water to be treated passes through the bypass channel 25.

Further, the water to be treated passes through the bypass channel 25, is supplied to the water supply pipe 110, and is supplied from the tap 111 or the like.

With this, water having a hardness level higher than that of the soft water generated through normal treatment can also be supplied to the tap 111. Thus, water can be supplied from the tap 111 or the like in a more stable manner.

### (Actions and Effects)

As described above, the water softening system 10 of the present embodiment includes the water feed channel 20 through which the water to be treated flows, and the crystallization unit 30 that causes the metal ion contained in the water to be treated to precipitate. Further, the water softening system 10 includes the separation unit 40 that separates the water to be treated having passed through the crystallization unit 30 into a crystal obtained through precipitation by the crystallization unit 30 and soft water. Further, the water feed channel 20 is configured so that at least a part thereof functions as the feed channel being a pressure application system in a substantially sealed state, and the crystallization unit 30 and the separation unit 40 are connected to parts corresponding to the feed channel being a pressure application system in a substantially sealed state in the water feed channel 20.

Further, the water softening device 1 of the present embodiment employs the water softening system 10 described above.

With this, the soft water can be generated without using salt water, and hence negative effects on the environment can further be reduced.

In this manner, according to the present embodiment, the water softening system 10 and the water softening device 1 that are capable of further reducing negative effects on the environment can be achieved.

Further, the crystallization unit 30 and the separation unit 40 are connected to the parts corresponding to the feed channel being a pressure application system in a substantially sealed state. With this, a pressure and a flow rate at the time of supplying the soft water can be increased. As a result, the water softening device 1 of a point-of-entry (POE) type that employs the water softening system 10 of the present embodiment can be obtained.

Further, there may be provided the pressure measuring means S1 that measures the pressure in the feed channel being a pressure application system in a substantially sealed state and the pressure raising means P1 and the pressure raising means P2 that supply water to the feed channel being a pressure application system in a substantially sealed state and raise a pressure. Further, when the pressure in the feed channel being a pressure application system in a substantially sealed state, which is measured by the pressure measuring means, is less than the predetermined value, the pressure raising means P1 and the pressure raising means P2 may be operated. Further, when the pressure is equal to or greater than the predetermined value, the pressure raising means P1 and the pressure raising means P2 may be stopped.

With this, control can be performed so that the pressure in the feed channel being a pressure application system in a substantially sealed state is a substantially constant value, and the soft water can be supplied in a more stable manner.

Further, there may be further provided the buffer tank 50 that is connected to the water feed channel 20 at the position upstream of the crystallization unit 30 and stores the water to be treated.

Moreover, the feed channel being a pressure application system in a substantially sealed state may include the circulation channel 22a capable of circulating the water to be treated, which passes through the crystallization unit 30, in the buffer tank 50. Further, the liquid feeding means P1 that circulates the water to be treated between the crystallization unit 30 and the buffer tank 50 may be connected to the feed channel being a pressure application system in a substantially sealed state.

In this manner, the soft water having the desired hardness can be obtained more securely as compared to a case of crystallization of the metal ion in one pass.

Further, the forcibly feeding means P1 may be connected to the feed channel being a pressure application system in a substantially sealed state. The forcibly feeding means increases a water feed pressure and a flow rate of the water to be treated, which is fed into the separation unit 40, as compared to a pressure and a flow rate of the water to be treated that circulates between the crystallization unit 30 and the buffer tank 50.

With this, the flow rate and the pressure required in the separation unit 40 can be secured, and liquid-solid separation in the separation unit 40 can be performed more securely.

Further, there may be further provided the second separation unit 80 that removes a particle residue contained in the soft water after separation in the separation unit 40.

With this, a crystal obtained through precipitation by the crystallization unit 30 can be removed from the soft water more securely.

Further, there may be further provided the soft water tank 70 that stores the soft water after separation in the separation unit 40.

With this, the generated soft water can be stored under a state in which the soft water can be taken out. Thus, the soft water can be taken out at a desired timing. As a result, usability of the water softening device 1 can be improved.

Further, when the water level of the soft water stored in the soft water tank 70 is lower than the predetermined water level, water having a hardness degree higher than that of the soft water after separation in the separation unit 40 may be supplied.

With this, even when the water softening system 10 is not operated normally or the like, water can be supplied more stably.

Further, the batch-type line for generating soft water may be formed in the feed channel being a pressure application system in a substantially sealed state. Further, the soft water stored in the soft water tank may have predetermined hardness after the water to be treated passes through the batch-type line for generating soft water for a plurality of times. Further, the water having a hardness level higher than that of the soft water may be supplied after the water to be treated passes through the batch-type line for generating soft water in one pass.

With this, water that is relatively softened as compared to the water to be treated before treatment is introduced. Thus, the hardness of the soft water stored in the soft water tank 70 can be prevented from being increased.

Further, the water feed channel 20 may include the bypass channel 25 that causes the water to be treated to flow out while bypassing the crystallization unit 30 and the separation unit 40. Further, the water having a hardness level higher than that of the soft water may be supplied after the water to be treated passes through the bypass channel 25.

With this, even when the water softening system 10 is not operated normally, water can be supplied.

Further, there may be provided the main tank 60 for storing the water to be treated, which is caused to flow into the feed channel being a pressure application system in a substantially sealed state.

With this, even when it is difficult to connect the water feed channel 20 directly to the clean water pipe 101, the system can be used.

The preferred embodiments of the present disclosure are described above. However, the present disclosure is not limited to the embodiments described above, and various modifications can be made.

For example, the configurations illustrated in the respective embodiments may be combined as appropriate.

Further, the close/open state of the valves described in each of the embodiments described above is merely an example, and may be set as appropriate based on treatment purposes, locations where the valves are provided, and like.

Further, specifications (for example, shape, size, and layout) of the water feed channel, the pressure raising means, and other details may be changed as appropriate.

### (Seventh Embodiment)

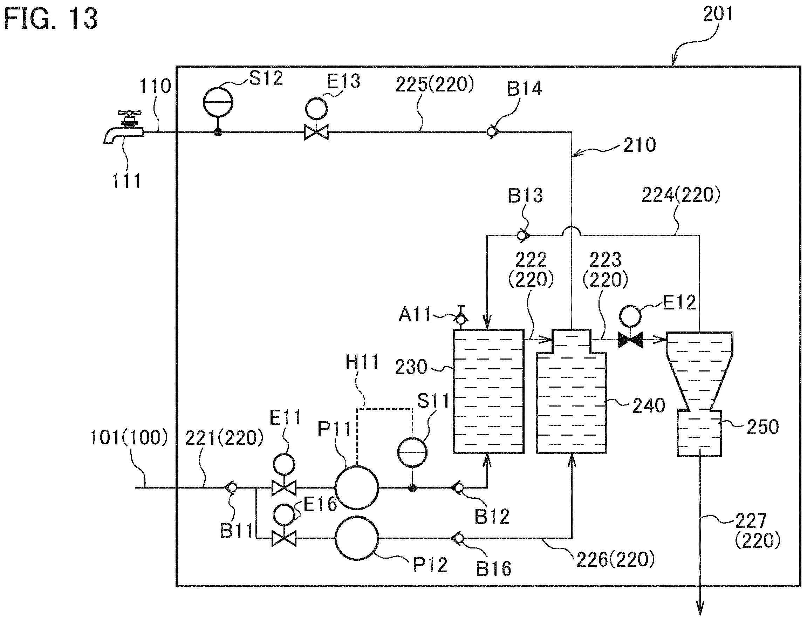

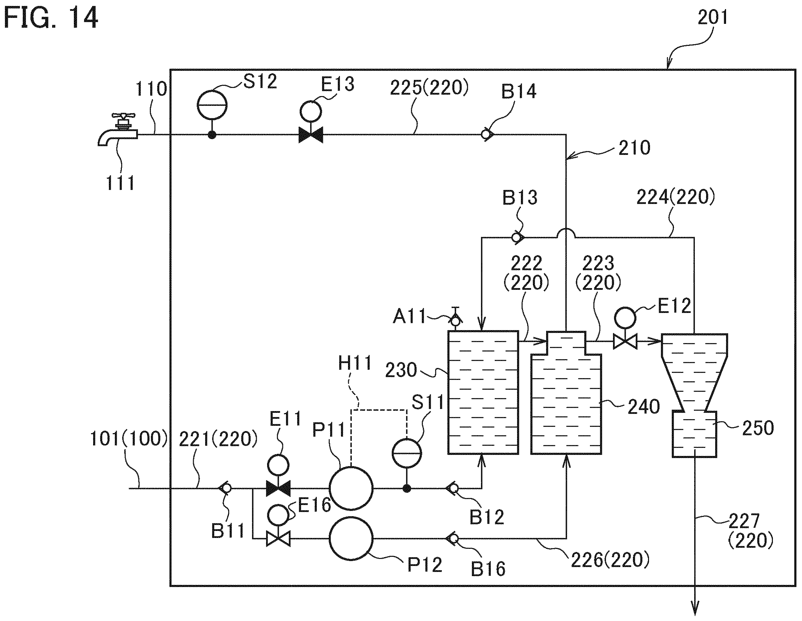

First, with reference to FIG. 13 and FIG. 14, the water softening device 1 according to the first embodiment is described.

A water softening device 201 according to the present embodiment is a device that generates soft water by removing, from water to be treated that is introduced, a metal ion such as a calcium ion and a magnesium ion contained in the water to be treated. In the present embodiment, there is exemplified the water softening device 201 of an point-of-entry (POE) type that is installed at an entrance of a construction such as a house and a building and is capable of supplying treated water being softened to the entire construction while performing treatment to water to be treated.

Specifically, the upstream side of the water softening device 201 is connected to a water-to-be-treated supply source 100 such as a clean water pipe 101, and the downstream side thereof is connected to a water supply pipe 110 laying in the construction. Further, a metal ion contained in water to be treated that is supplied from the clean water pipe 101 is removed in the water softening device 201, treated water (soft water) obtained by removing the metal ion is supplied to the water supply pipe 110, and then the soft water is supplied from the tap 111 or the like in a household. Note that the water-to-be-treated supply source 100 is not limited to the clean water pipe 101, and a water source such as a well, a river, and a pond may be regarded as the water-to-be-treated supply source 100. When a water source such as a well, a river, and a pond is regarded as the water-to-be-treated supply source 100, water or rain water pumped out from the water source is regarded as the water to be treated that is supplied to the water softening device 201.

Here, the water softening device 201 according to the present embodiment includes a water softening system 210 that softens the water to be treated by crystallizing a metal ion and separating the obtained crystal away from the water to be treated. When the water softening system 210 as described above is employed, the water to be treated can be softened without using salt water. This can reduce negative effects on the environment.

The water softening system 210 includes a crystallization unit 230 that causes a metal ion contained in the water to be treated, which contains the metal ion, to precipitate. Further, there is provided a separation unit 240 that includes a filtering medium for filtering the crystal obtained through precipitation in the crystallization unit 230. Moreover, there is provided a classification/separation unit 250 that performs separation by classifying the water to be treated, which contains crystals obtained through separation in the separation unit 240, into water to be treated that contains a crystal having a smaller size and water to be treated that contains a crystal having a large size, when the crystals adhering to the filtering medium of the separation unit 240 are discharged to the outside of the system through backwashing. The crystal having a small size is a crystal that passes through the filtering medium of the separation unit 240, and the crystal having a large size is a crystal that does not pass through the filtering medium. Moreover, there is provided a returning channel 224 that returns, to the crystallization unit 230, the water to be treated that contains the crystal having a small size among the two kinds of water to be treated after classification and separation in the classification/separation unit 250.

The crystallization unit 230, the separation unit 240, and the classification/separation unit 250 are connected to a water feed channel 220 so that the crystallization unit 230, the separation unit 240, and the classification/separation unit 250 are positioned in the stated order from upstream.

Specifically, the water feed channel 220 includes a crystallization unit introduction channel 221 that is connected to the upstream side of the crystallization unit 230 and that is capable of introducing the water to be treated into the crystallization unit 230. The upstream side of the crystallization unit introduction channel 221 is connected to the water-to-be-treated supply source 100 such as the clean water pipe 101, and the water to be treated that is supplied from the water-to-be-treated supply source 100 passes through the crystallization unit introduction channel 221, and is introduced into the crystallization unit 230.

Further, in the present embodiment, a check valve B11, a valve E11, a pump P11, a pressure sensor S11, and a check valve B12 are connected to the crystallization unit introduction channel 221 in the stated order from upstream.

Further, a backwashing channel 226 branches from the crystallization unit introduction channel 221 at a position upstream of the valve E11, and the backwashing channel 226 is connected to the separation unit 240. Specifically, the water feed channel 220 further includes the backwashing channel 226 that is connected to the upstream side of the crystallization unit 230 and is capable of introducing the water to be treated into the separation unit 240.

Further, in the present embodiment, a valve E16, a pump P12, and a check valve B16 are connected to the backwashing channel 226 in the stated order from upstream.

Further, the water feed channel 220 includes a separation unit introduction channel 222 that is connected to the downstream side of the crystallization unit 230 and the upstream side of the separation unit 240 and that is capable of introducing, into the separation unit 240, the water to be treated after the metal ion is crystallized in the crystallization unit 230. The water to be treated that is supplied from the crystallization unit 230 to the separation unit 240 passes through the separation unit introduction channel 222, and is introduced into the separation unit 240.

Further, the water to be treated passes through the crystallization unit introduction channel 221, and is supplied into the crystallization unit 230. Then, the metal ion is crystallized in the crystallization unit 230. The crystallization unit 230 may employ a freely-selected method of crystallizing the metal ion in the water to be treated as long as crystallization can be performed without using salt water, and various methods may be used. For example, a method of performing crystallization by injecting a chemical agent into the water to be treated that is introduced into the crystallization unit 230 and thus alkalizing the water to be treated may be employed. Alternatively, a method of performing crystallization by generating alkali ion water through electrolysis and thus alkalizing the water to be treated may be employed. Further, the metal ion may be crystallized through use of micro bubbles present in the water to be treated (micro bubbles generated in the water to be treated).

Further, the water to be treated after the metal ion is crystallized in the crystallization unit 230 passes through the separation unit introduction channel 222, is introduced into the separation unit 240, and is separated into a crystal obtained by crystallizing the metal ion and soft water by the separation unit 240.

The separation unit 240 has a function of separating the crystal obtained through precipitation in the crystallization unit by filtering. Specifically, the separation unit 240 includes a filtering medium inside. A type of the filtering medium is not particularly limited as long as filtering of a crystal and liquid-solid separation can be performed. A filter-type medium and a granular-type medium are exemplified, but the present embodiment is not limited thereto.

Further, the upper part of the separation unit 240 is connected to a treated water feed channel 225 into which the water to be treated after removal of the crystal in the separation unit 240 (soft water) is introduced. Further, a classification/separation unit introduction channel 223 is connected to the upper part of the separation unit 240, that is, at a position other than a connection position of the treated water feed channel 225. The water to be treated that contains the crystal removed from the filtering medium is introduced into the classification/separation unit introduction channel 223 at the time of backwashing for washing the filtering medium in the separation unit 240. Note that, at the time of backwashing, the water to be treated is introduced through the backwashing channel 226.

In this manner, in the present embodiment, the water feed channel 220 further includes the treated water feed channel 225 that is connected to the downstream side of the separation unit 240 and allows the treated water to be introduced thereinto, and the classification/separation unit introduction channel 223 that is connected to the downstream side of the separation unit 240 and allows the water to be treated that contains the crystal to be introduced thereinto at the time of backwashing.

Further, in the present embodiment, a valve E12 is connected to the classification/separation unit introduction channel 223. Further, in the present embodiment, the downstream side of the treated water feed channel 225 is connected to the water supply pipe 110. A check valve B14, a valve E13, and a flow rate sensor S12 that measures a used amount of the treated water are connected to the treated water feed channel 225 in the stated order from upstream. Further, the tap 111 is connected to the downstream side of the water supply pipe 110.

The classification/separation unit 250 performs separation by classifying the water to be treated that contains the crystals obtained through separation in the separation unit 240 into the water to be treated that contains the crystal having a small size and passing through the filtering medium of the separation unit 240 and the water to be treated that contains the crystal having a large size and not passing through the filtering medium. Here, in the following description, the crystal having a small size and passing through the filtering medium of the separation unit 240 is simply referred to as a "small crystal", and the crystal having a large size and not passing through the filtering medium is simply referred to as a "large crystal". Such classification and separation can be performed by a centrifugal force generated by a high-speed turning flow. For example, a cyclone type liquid-solid separator may be used. The cyclone type liquid-solid separator is a device that uses a centrifugal force instead of a gravitational force to perform separation by classifying the water to be treated that contains the crystal obtained through separation in the separation unit 240 into the water to be treated that contains the crystal having a small size and the water to be treated that contains the crystal having a large size. Note that, in the classification/separation unit 250, classification and separation into the water to be treated that contains the crystal having a small size and the water to be treated that contains the crystal having a large size are not necessarily performed in a strict sense. Specifically, in some cases, the water to be treated that contains the crystal having a small size may contain a large crystal, the water to be treated that contains the crystal having a large size may contain a small crystal. In other words, to the utmost, the classification/separation unit 250 performs classification and separation into the water to be treated that contains a larger number of small crystals as compared to large crystals and the water to be treated that contains a larger number of large crystals as compared to small crystals.

Classification and separation of a crystal in the classification/separation unit 250 are performed based on whether a crystal passes through the filtering medium of the separation unit 240. Specifically, as described above, the crystal that passes through the filtering medium of the separation unit 240 is classified as a small crystal, and the crystal that does not pass through the filtering medium is classified as a large crystal. Further, for classification performed based on whether a crystal passes through the filtering medium of the separation unit 240, a flow rate and/or a flow speed of the high-speed turning flow generated in the classification/separation unit 250 is set as appropriate. With this, a crystal size for classification into the large crystal and the small crystal can be adjusted.

Here, an example of specific sizes of the small crystal and the large crystal is given. For example, it is assumed that a granular-type filtering medium is used as the filtering medium. Based on experience, it is assumed that a gap present in the filtering medium is approximately 0.15 times as large as an average of a grain diameter of the granular type filtering medium. Therefore, when the granular type filtering medium is used as the filtering medium, a crystal equal to or smaller than a size approximately 0.15 times as large as the average grain diameter of the granular type filtering medium is classified as the small crystal, and a crystal exceeding the size approximately 0.15 times as large as the average grain diameter is classified as the large crystal. For example, when the average grain diameter of the granular type filtering medium is, for example, 100 µm, the gap present in the filtering medium presumptively has a size of approximately 15 µm. Further, the small crystal passes through the gap having such a size has an average grain diameter less than 15 µm, and the large crystal has an average grain diameter equal to or greater than 15 µm. Note that the "average grain diameter" indicates an average grain diameter based on a volume measured according to a laser diffraction scattering method. More specifically, the "average grain diameter" indicates a grain diameter (d10%) corresponding to 10% of grain size distribution that is cumulative from a smaller grain diameter side. The grain size distribution is obtained through grain size distribution measurement according to a laser diffraction scattering method.

A flow direction of the water to be treated, which is introduced from the backwashing channel 226 into the separation unit 240, in the filtering medium is a direction opposite to a flow direction of the water to be treated, which passes through the separation unit introduction channel 222 and is introduced into the separation unit 240, in the filtering medium. Specifically, the flow direction of the water to be treated, which is introduced from the backwashing channel 226 into the separation unit 240, is a direction for removing a crystal adhering to the filtering medium.

A relatively high flow rate and a relatively large pressure are required to circulate the water to be treated for classification and separation. Thus, the pump P12 is required to output power higher than that of the pump P11 for circulating the water to be treated.

The upper part of the classification/separation unit 250 is connected to the returning channel 224 for returning the water to be treated, which contains the crystal having a small size after centrifugal separation in the classification/separation unit 250, into the crystallization unit 230. Further, the lower part of the classification/separation unit 250 is connected to a discharge channel 227 into which the water to be treated that contains the crystal having a large size after centrifugal separation in the classification/separation unit 250 is introduced.

In this manner, in the present embodiment, the water feed channel 220 further includes the returning channel 224 and the discharge channel 227. Further, in the present embodiment, a check valve B13 is connected to the returning channel 224.

Note that an air vent valve A11 is mounted to the water softening system 210. The air vent valve A11 removes air in the water softening system 210. In the present embodiment, an example in which the air vent valve A11 is mounted to the crystallization unit 230 is given (see FIG. 13 and FIG. 14). However, the mounting position of the air vent valve A11 is not limited to the crystallization unit 230, and may be variously selected such as the uppermost part of the water softening system 210.

In the water softening device 201 of the present embodiment, a close/open state of each valve differs at the time of using water (soft water) and at the time of backwashing for washing the filtering medium of the separation unit 240. Description is made below on a close/open state of the valves and a flow of the water to be treated in accordance with the close/open state for each of a mode of using water (soft water) and a mode of backwashing for washing the filtering medium of the separation unit 240.

First, description is made on the mode of using water in the water softening device 201 of the present embodiment. FIG. 13 illustrates a mode in which water is used while the water softening device 201 performs crystallization treatment. The state in FIG. 13 is a state in which the valve E11 and the valve E13 are opened and the valve E12 is closed. In the state in FIG. 13, the water to be treated that is introduced from the clean water pipe 101 passes through the crystallization unit 230 and the separation unit 240 via the crystallization unit introduction channel 221 and the separation unit introduction channel 222, and is further introduced to the tap 111 via the treated water feed channel 225. Specifically, a metal ion contained in the water to be treated, which is introduced from the clean water pipe 101, precipitates as a crystal in the crystallization unit 230, and the crystal is separated in the separation unit 240. The water to be treated from which the crystal is removed is supplied from the tap 111 as soft water. Note that, as in FIG. 13, when a water pressure of the water to be treated that is supplied from the clean water pipe 101 is low, specifically, when soft water is supplied from the tap 111 arranged at a high position such as a second floor of a construction, the pump P11 is operated.

Meanwhile, as water softening treatment continues, more metal ion-derived crystals adhere to the filtering medium in the separation unit 240. Thus, washing is required. In view of this, in the present embodiment, as illustrated in FIG. 14, backwashing is performed to remove a crystal adhering to the filtering medium in the separation unit 240. Specifically, FIG. 14 illustrates a mode in which backwashing is performed for washing the filtering medium of the separation unit 240.

FIG. 14 illustrates a state in which the valve E12 is opened and the valve E11 and the valve E13 are closed. In the state illustrated in FIG. 14, the water to be treated that is introduced from the clean water pipe 101 passes through the separation unit 240 via the backwashing channel 226, and is introduced into the classification/separation unit 250. In the separation unit 240, the water to be treated that is introduced separates crystals adhering to the filtering medium, and the crystals are mixed in the water to be treated. Further, the water to be treated that contains the crystals is introduced into the classification/separation unit 250. Here, in the state illustrated in FIG. 14, the pump P12 is operated to increase a pressure of the water to be treated, and a high-speed turning flow is generated in the classification/separation unit 250. Then, the water to be treated that contains the crystals is introduced into the classification/separation unit 250, and receives a centrifugal force. With this, the small crystal (having light weight) is distributed upward, and the large crystal (having heavy weight) is distributed downward. Specifically, in the classification/separation unit 250, the water to be treated that contains the crystals is separated into the one containing the large crystal and the one containing the small crystal.

Further, the water to be treated that contains the crystal having a large size passes through the discharge channel 227, and is discharged to the outside of the system. Meanwhile, the water to be treated that contains the crystal having a small size passes through the returning channel 224 positioned above the classification/separation unit 250, and returns to the crystallization unit 230. Further, after returning to the crystallization unit 230, the small crystal contained in the water to be treated contributes promotion of crystallization as a seed crystal.

In this manner, at the time of backwashing, the water to be treated that contains the crystal having a large size is discharged, whereas the water to be treated that contains the crystal having a small size is reused in the crystallization unit 230. Therefore, an amount of wasted water can be reduced at the time of backwashing. Further, the small crystal can be reused as a seed crystal.

Meanwhile, in the water softening device of the present embodiment, when a large amount of the water to be treated that contains the crystal having a large size is discharged from the discharge channel 227 to the outside of the system, there is a risk of clogging in a pipe outside of the system. In view of this, in a case where the water to be treated that contains the crystal having a large size is discharged to the outside of the system in a repeated manner, it is preferred that a ratio of the amount of the water to be treated that is discharged to the outside of the system with respect to the water to be treated that is supplied into the classification/separation unit be increased for each prescribed number of discharge operations. Specifically, in a case where the crystals separated in the separation unit 240 are discharged to the outside of the system in a repeated manner, a ratio of an amount of the water, which is discharged to the outside of the system, with respect to the treated water supplied into the classification/separation unit 250 is increased for each prescribed number of discharge operations, for example, one in every five discharge operations. This can be achieved by providing a valve or the like to the returning channel 224 returning to the crystallization unit 230 and reducing a returning flow rate, or by reducing a flow rate and a pressure of the water fed into the classification/separation unit 250, degrading a separation function of a high-speed turning flow, and feeding a large amount of water to the discharge side.

### (Second Embodiment)

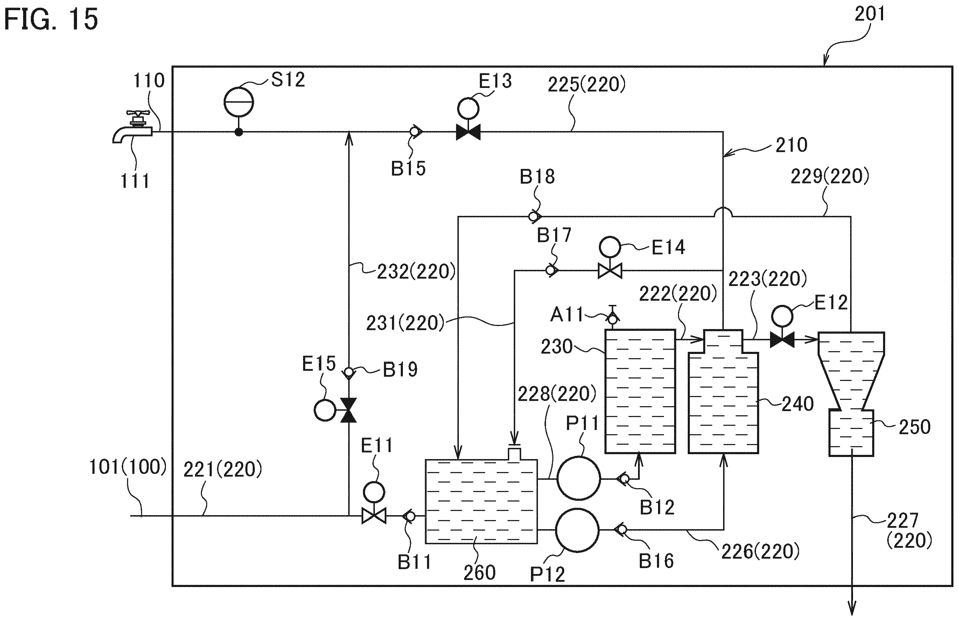

Next, with reference to FIG. 15 to FIG. 17, the water softening device 201 of the second embodiment is described. The second embodiment is different from the first embodiment mainly in that the second embodiment includes a buffer tank, a bypass channel, and peripheral members thereof. In FIG. 15 to FIG. 17, the constituent elements that are substantially the same as the constituent elements in the first embodiment are denoted with the same reference symbols, and the description for some of the constituent elements is partially omitted below. However, the corresponding description in the first embodiment is applied to the description for the constituent elements.

The water softening system 210 illustrated in FIG. 15 to FIG. 17 includes the crystallization unit 230 that causes a metal ion contained in the water to be treated, which contains the metal ion, to precipitate. Further, there is provided the separation unit 240 that includes a filtering medium for filtering the crystal obtained through precipitation in the crystallization unit. Moreover, there is provided the classification/separation unit 250 that performs separation by classifying the water to be treated, which contains crystals obtained through separation in the separation unit 240, into water to be treated that contains a crystal having a smaller size and water to be treated that contains a crystal having a large size, when the crystals adhering to the filtering medium of the separation unit are discharged to the outside of the system through backwashing. The crystal having a small size is a crystal that passes through the filtering medium of the separation unit 240, and the crystal having a large size is a crystal that does not pass through the filtering medium. Moreover, there is provided a returning channel 229 that returns, to a buffer tank 260 positioned at the upstream side of the crystallization unit 230, the water to be treated that contains the crystal having a small size among the two kinds of water to be treated after classification and separation in the classification/separation unit.

The crystallization unit 230, the separation unit 240, and the classification/separation unit 250 are connected to the water feed channel 220 so that the crystallization unit 230, the separation unit 240, and the classification/separation unit 250 are positioned in the stated order from upstream. The configurations of the crystallization unit 230, the separation unit 240, and the classification/separation unit 250 may be the same configurations as those in the first embodiment described above. Therefore, the detailed description for the crystallization unit 230, the separation unit 240, and the classification/separation unit 250 is omitted.

Further, in the present embodiment, the water feed channel 220 includes the crystallization unit introduction channel 221 that is connected to the upstream side of the crystallization unit 230 and that is capable of introducing the water to be treated into the crystallization unit 230. The upstream side of the crystallization unit introduction channel 221 is connected to the water-to-be-treated supply source 100 such as the clean water pipe 101, and the water to be treated that is supplied from the water-to-be-treated supply source 100 passes through the crystallization unit introduction channel 221, and is introduced into the crystallization unit 230.

Here, in the present embodiment, the water softening system 210 further includes the buffer tank 260 that is connected to the water feed channel 220 at the position upstream of the crystallization unit 230 and stores the water to be treated. Further, the buffer tank 260 is connected to the classification/separation unit 250 through intermediation of the returning channel 229. Specifically, the water softening system 210 according to the present embodiment is provided with the buffer tank 260 capable of storing a certain amount of the water to be treated.

The buffer tank 260 is connected to the middle of the crystallization unit introduction channel 221. Specifically, the buffer tank 260 is connected to the crystallization unit introduction channel 221 at a position downstream of the valve E11 and upstream of the pump P11 and the pump P12.

The downstream side of the buffer tank 260 is connected to an extension channel 228 of the crystallization unit introduction channel 221 and the backwashing channel 226 connected to the separation unit 240.

Therefore, in the present embodiment, the valve E11, the check valve B11, the buffer tank 260, the pump (pressure raising means) P11, and the check valve B12 are connected to the crystallization unit introduction channel 221 in the stated order from upstream. Further, the pump P12 and the check valve B16 are connected to the backwashing channel 226.

In this manner, in the present embodiment, the crystallization unit introduction channel 221 includes the part that is positioned upstream of the buffer tank 260 and introduces the water to be treated into the buffer tank 260, and the extension channel 228 for introducing, into the crystallization unit 230, the water to be treated that is supplied from the buffer tank 260.

Further, the water feed channel 220 includes the separation unit introduction channel 222 that is connected to the downstream side of the crystallization unit 230 and the upstream side of the separation unit 240 and that is capable of introducing, into the separation unit 240, the water to be treated after the metal ion is crystallized in the crystallization unit 230.

Further, the upper part of the separation unit 240 is connected to the treated water feed channel 225 into which the water to be treated after removal of the crystal in the separation unit 240 (soft water) is introduced. Further, there is provided a circulation channel 231 for circulating the water to be treated, which is introduced into the treated water feed channel 225, in the buffer tank 260. A valve E14 and a check valve B17 are connected to the circulation channel 231. The soft water after removing a crystal in the separation unit 240 can be introduced into the buffer tank 260 through the circulation channel 231, and the soft water can be stored in the buffer tank 260.

Further, the classification/separation unit introduction channel 223 is connected to the upper part of the separation unit 240, that is, at the position other than the connection position of the treated water feed channel 225. The water to be treated that contains the crystal removed from the filtering medium is introduced into the classification/separation unit introduction channel 223 at the time of backwashing for washing the filtering medium in the separation unit 240. Note that, at the time of backwashing, the water to be treated is introduced through the backwashing channel 226.

In this manner, in the present embodiment, the water feed channel 220 further includes the treated water feed channel 225 that is connected to the downstream side of the separation unit 240 and allows the treated water to be introduced thereinto, and the classification/separation unit introduction channel 223 that is connected to the downstream side of the separation unit 240 and allows the water to be treated that contains the crystal to be introduced thereinto at the time of backwashing.

Further, in the present embodiment, the valve E12 is connected to the classification/separation unit introduction channel 223. Further, in the present embodiment, the downstream side of the treated water feed channel 225 is connected to the water supply pipe 110. The valve E13, a check valve B15, and the flow rate sensor S12 that measures a used amount of the treated water are connected to the treated water feed channel 225 in the stated order from upstream. Further, the tap 111 is connected to the downstream side of the water supply pipe 110.

The upper part of the classification/separation unit 250 is connected to the returning channel 229 for returning the water to be treated, which contains the crystal having a small size after centrifugal separation in the classification/separation unit 250, into the buffer tank 260. Further, the lower part of the classification/separation unit 250 is connected to the discharge channel 227 into which the water to be treated that contains the crystal having a large size after centrifugal separation in the classification/separation unit 250 is introduced.

In this manner, in the present embodiment, the water feed channel 220 further includes the returning channel 229 and the discharge channel 227. Further, in the present embodiment, the check valve B13 is connected to the returning channel 224.

Meanwhile, in the present embodiment, the water feed channel 220 includes a bypass channel 232 that causes the water to be treated to flow out while bypassing the crystallization unit 230, the separation unit 240, and the classification/separation unit 250. The upstream side of the bypass channel 232 is connected to the middle of the crystallization unit introduction channel 221, and the downstream side thereof is connected to the middle of the treated water feed channel 225. Specifically, the upstream side of the bypass channel 232 is connected to the crystallization unit introduction channel 221 at a position downstream of the clean water pipe 101 and upstream of the valve E11. Meanwhile, the downstream side of the bypass channel 232 is connected to the treated water feed channel 225 at a position downstream of the check valve B15.

Further, a valve E15 and a check valve B19 are connected to the bypass channel 232 in the stated order from upstream. Even when the water softening system 210 is not operated normally, the water to be treated can be taken out from the tap 111 by providing the bypass channel 232 as described above.

The water softening device 201 of the present embodiment can be operated in the following three modes. The first one is Mode A in which the water to be treated circulates through the buffer tank 260, the crystallization unit 230, and the separation unit 240, and the soft water is generated and is stored in the buffer tank 260. The second one is Mode B in which the generated soft water is supplied from the tap 111 and is used. The third one is Mode C in which a crystal adhering to the filtering medium in the separation unit 240 is removed through backwashing. Description is made below on the close/open state of the valves and the flow of the water to be treated in accordance with the close/open state in each of the modes.

### [Mode A]

FIG. 15 illustrates a state in which Mode A is performed in the water softening device 201. In the state illustrated in FIG. 15, the valve E11 and the valve E14 are opened, and the valve E12 and the valve E13 are closed. In this state, the circulation channel for circulating the water to be treated through the buffer tank 260, the crystallization unit 230, and the separation unit 240 is formed. Further, the pump P11 is operated to circulate the water to be treated through the buffer tank 260, the crystallization unit 230, and the separation unit 240, and thus the generated soft water can be stored in the buffer tank 260 via the crystallization unit 230 and the separation unit 240. Specifically, Mode A is a circulation operation mode in which the water to be treated circulates through the buffer tank 260, the crystallization unit 230, and the separation unit 240, and is softened.

In this manner, in the present embodiment, when crystallization of the metal ion is performed, the water to be treated, which is stored in the buffer tank 260, is caused to circulate through the circulation channel under a state in which a certain amount of the water to be treated is stored in the buffer tank 260. In this manner, the time period required for crystallization of the metal ion in the water to be treated is increased so as to generate the soft water having the desired hardness. In this manner, in the process of crystallization of the metal ion, the water to be treated is caused to circulate through the circulation channel. With this, the soft water having the desired hardness can be obtained more securely as compared to a case of crystallization of the metal ion in one pass.

Moreover, in Mode A (circulation operation mode), it is preferred that at least one of a circulation flow rate of the water to be treated or a pressure difference before and after the separation unit 240 be measured. Further, it is preferred that the water to be treated that contains the crystal having a large size be discharged to the outside of the system when a circulation flow rate of the water to be treated is reduced from a predetermined value by a certain amount or more, and the reduction is measured, or when a pressure difference before and after the separation unit is increased from a predetermined value by a certain amount or more, and the increase is measured. Specifically, a crystal adhering to the filtering medium of the separation unit 240 inhibits a flow of the water to be treated. Thus, it is assumed that a certain amount of crystals is captured in the filtering medium of the separation unit 240 when the circulation flow rate of the water to be treated is reduced, and when the pressure difference before and after the separation unit 240 is increased. In view of this, it is preferred that backwashing for the separation unit 240, that is, Mode C be performed to remove a crystal adhering to the filtering medium of the separation unit 240. Note that a flow rate meter is arranged at a freely-selected position in the circulation channel. With this, the circulation flow rate of the water to be treated can be measured by the flow rate meter. Further, a pressure meter is arranged at each of the separation unit introduction channel 222 and the classification/separation unit introduction channel 223. With this, the pressure difference before and after the separation unit 240 can be measured by the pressure meter. Alternatively, a used water amount measurement unit that measures a used water amount may be arranged, and a discharge operation may be performed for every certain used water amount. In FIG. 15 to FIG. 17, there is provided, as a used water amount measurement unit, the flow rate sensor S12 at the most downstream side of the treated water feed channel 225. Thus, the flow rate sensor S12 measures a used water amount. Therefore, a discharge operation can be performed based on a water amount measured by the flow rate sensor S12.

### [Mode B]

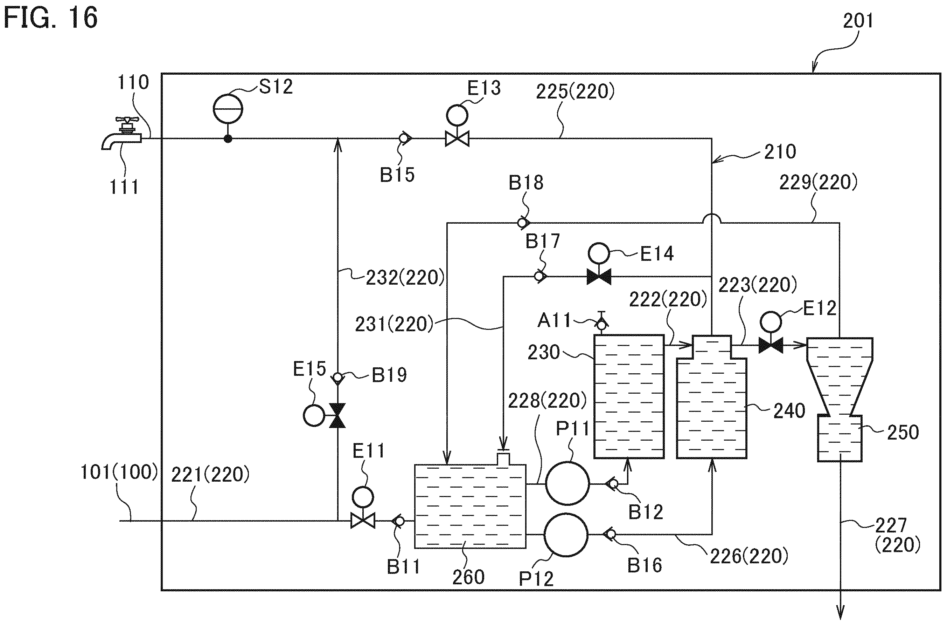

FIG. 16 illustrates a state in which Mode B is performed in the water softening device 201. In the state illustrated in FIG. 16, the valve E11 and the valve E13 are opened, and the valve E12 and the valve E14 are closed. In Mode B, the water (the water to be treated or the treated water, or water obtained by mixing those water) stored in the buffer tank 260 passes through the crystallization unit 230 and the separation unit 240 by operating the pump P11, passes through the treated water feed channel 225, and is introduced into the tap 111. Further, the soft water is supplied and used by opening the tap 111. Specifically, when the water to be treated is softened, the water to be treated passes through the crystallization unit 230 and the separation unit 240 at least once in Mode A and Mode B.

### [Mode C]

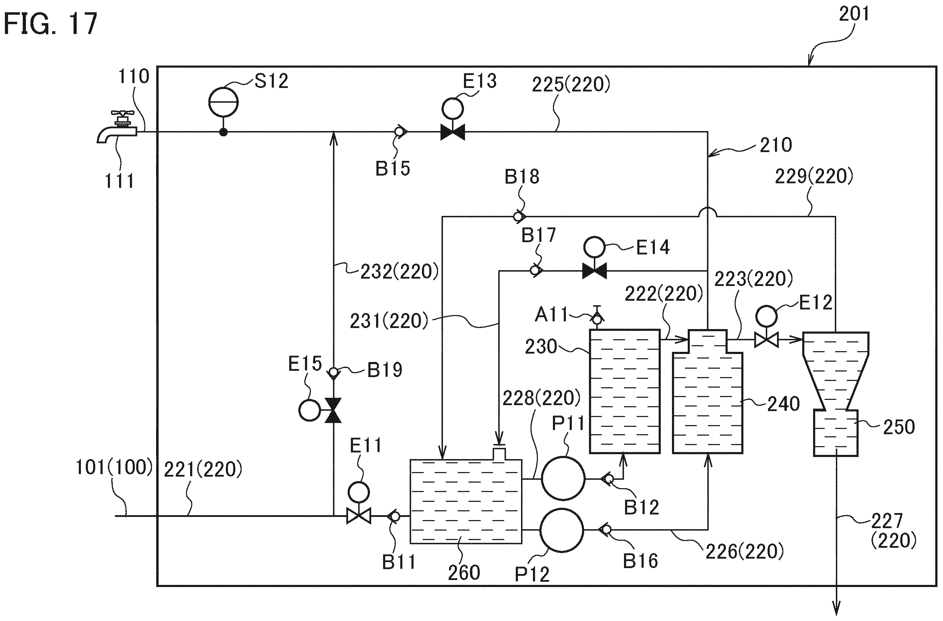

FIG. 17 illustrates a state in which Mode C is performed in the water softening device 201. In the state illustrated in FIG. 17, the valve E11 and the valve E12 are opened, and the valve E13 and the valve E14 are closed. In this state, a space formed of a part of the space in the water feed channel 220, the buffer tank 260, the separation unit 240, and the classification/separation unit 250 functions as the substantially sealed space. In this state, the pump (pressure raising means) P2 is operated to supply the water (water to be treated) into the substantially sealed space. With this, first, crystals adhering to the filtering medium in the separation unit 240 are separated by the supplied water. Subsequently, the water containing the crystals after separation is introduced into the classification/separation unit 250, and is separated through classification into water containing a small crystal and water containing a large crystal by a centrifugal force generated by a high-speed turning flow. Further, the water containing the large crystal is discharged from the discharge channel 227. Meanwhile, the water containing the small crystal returns to the buffer tank 260 via the returning channel 229, and the small crystal is used as a seed crystal for crystallization. In this manner, part of the water used at the time of backwashing is discharged, but the water other than that returns to the buffer tank 260. Thus, wasted water can be reduced. Moreover, when the water containing the small crystal, which returns to the buffer tank 260, is introduced again into the crystallization unit 230, the small crystal contained in the water to be treated contributes promotion of crystallization as a seed crystal.

Meanwhile, similarly in the first embodiment, in the water softening device of the present embodiment, the water to be treated that contains the crystal having a large size is discharged from the discharge channel 227 to the outside of the system, there is a risk of clogging in a pipe outside of the system. In view of this, in a case where the water to be treated that contains the crystal having a large size is discharged to the outside of the system in a repeated manner, it is preferred that a ratio of the amount of the water to be treated that is discharged to the outside of the system with respect to the water to be treated that is supplied into the classification/separation unit be increased for each prescribed number of discharge operations. Specifically, in a case where the crystals separated in the separation unit 240 are discharged to the outside of the system in a repeated manner, a ratio of an amount of the water, which is discharged to the outside of the system, with respect to the treated water supplied into the classification/separation unit 250 is increased for each prescribed number of discharge operations, for example, one in every five discharge operations. This can be achieved by providing a valve or the like to the returning channel 229 returning to the buffer tank 260 and reducing a returning flow rate, or by reducing a flow rate and a pressure of the water fed into the classification/separation unit 250, degrading a separation function of a high-speed turning flow, and feeding a large amount of water to the discharge side.

### (Third Embodiment)

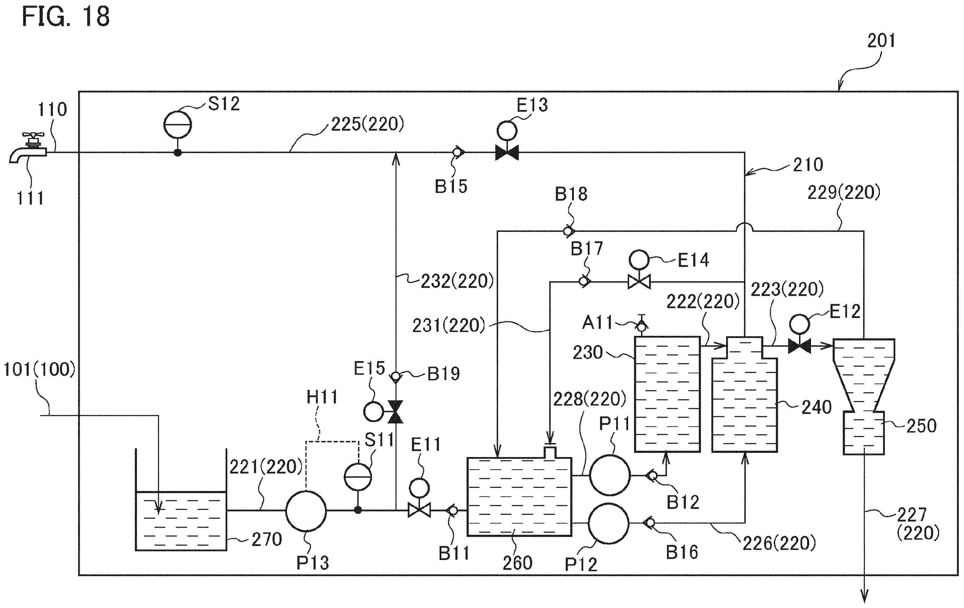

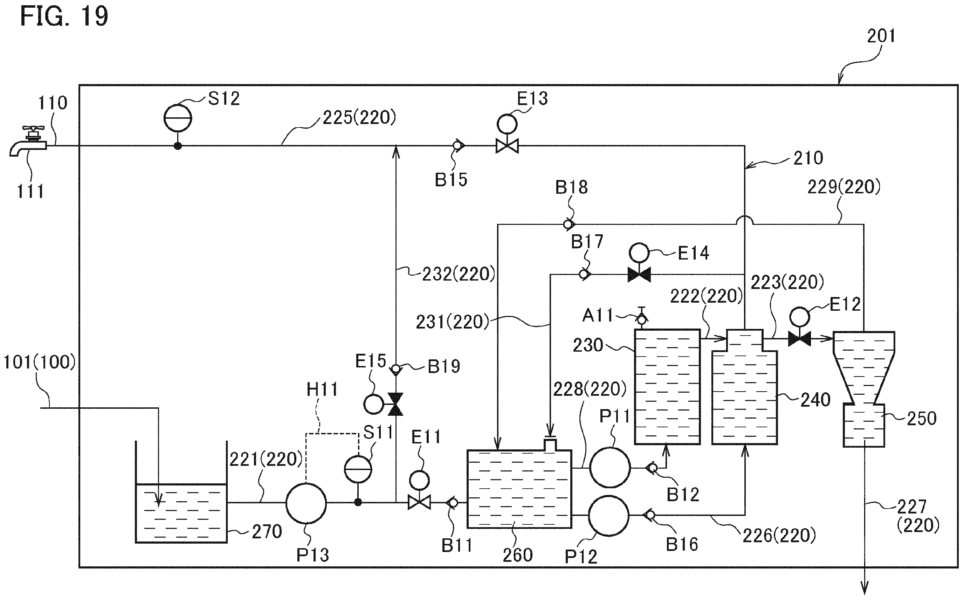

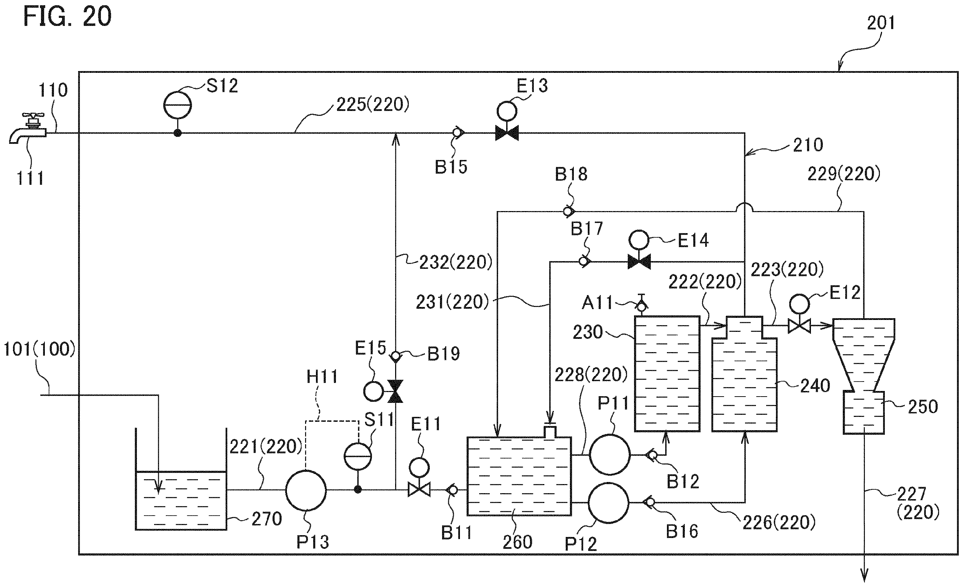

Next, with reference to FIG. 18 to FIG. 20, the water softening device 201 of the third embodiment is described. The third embodiment is different from the second embodiment only in that a main tank, a pump, and peripheral members thereof are provided, and the configurations other than those are the same as those in the second embodiment. Therefore, in FIG. 18 to FIG. 20, the constituent elements that are substantially the same as the constituent elements in the second embodiment are denoted with the same reference symbols, and description therefor is omitted. However, the corresponding description in the first embodiment and the second embodiment are applied to the constituent elements omitted in the description.

In the third embodiment, the water softening system 210 includes a main tank 270 for storing the water to be treated, which is caused to flow into the water feed channel 220. Further, the upstream side of the crystallization unit introduction channel 221 is connected to the main tank 270. The main tank 270 is a tank for storing, as the water to be treated, the water taken out from the water-to-be-treated supply source 100 such as the clean water pipe 101. Further, even when it is difficult to connect the water feed channel 220 directly to the clean water pipe 101, the water taken from the clean water pipe 101 can be softened, and can be supplied to the water supply pipe 110 in the construction by using the water softening device 201 as described above.

In the present embodiment, a pump P13 and the pressure sensor S11 are connected to the crystallization unit introduction channel 221 at positions upstream of the valve E11. In the present embodiment, the pressure sensor S11 is electrically connected to a control unit (omitted in illustration) of the pump P13 via a wiring line H11, and a drive of the pump P13 is controlled based on the water pressure in the crystallization unit introduction channel 221, which is measured by the pressure sensor S11.

Meanwhile, similarly to the present embodiment, in the second embodiment, the water feed channel 220 also includes the bypass channel 232 that causes the water to be treated to flow out while bypassing the crystallization unit 230, the separation unit 240, and the classification/separation unit 250. The upstream side of the bypass channel 232 is connected to the middle of the crystallization unit introduction channel 221, and the downstream side thereof is connected to the middle of the treated water feed channel 225. Specifically, the upstream side of the bypass channel 232 is connected to the crystallization unit introduction channel 221 at a position downstream of the pressure sensor S11 and upstream of the valve E11. Meanwhile, the downstream side of the bypass channel 232 is connected to the treated water feed channel 225 at a position downstream of the check valve B15 and upstream of the flow rate sensor S12.

Further, the valve E15 and the check valve B19 are connected to the bypass channel 232 in the stated order from upstream. Even when the water softening system 210 is not operated normally, the water to be treated can be taken out from the tap 111 by providing the bypass channel 232 as described above.

In the third embodiment, the main tank 270 and the periphery thereof are described. The configurations other than those are the same as those in the second embodiment. Specifically, in the third embodiment, operations may be performed in the three modes including Mode A to Mode C. Further, in the present embodiment, the pump P3 is operated. With this, at least a part of the water feed channel 220 downstream of the pump P3 is used as the pressure application system in a substantially sealed state. In this manner, at least a part of the water feed channel 220 is configured to function as the feed channel being a pressure application system in a substantially sealed state, and thus soft water can be supplied from the tap 111 arranged at a high position such as a second floor of a construction. Further, the water softening system 210 is obtained as the pressure application system in a substantially sealed state, and thus it can be expected that a problem caused by entry of foreign matters from the outside can be suppressed.

Note that the third embodiment is different from the second embodiment mainly in that the main tank 270 is provided. The configurations other than this point are the same as those in the second embodiment. Therefore, similarly in the second embodiment, at the time of backwashing for a crystal adhering to the filtering medium of the separation unit 240, wasted water can be reduced. Further, when the water containing the small crystal, which returns to the buffer tank 260, is introduced again into the crystallization unit 230, the small crystal contained in the water to be treated contributes promotion of crystallization as a seed crystal.

The entire contents of Japanese Patent Application No. 2019-118783 (filed on June 26, 2019), Japanese Patent Application No. 2019-140592 (filed on July 31, 2019), and Japanese Patent Application No. 2019-226563 (filed on December 16, 2019) are invoked herein.

### Industrial Applicability

According to the present embodiment, the water softening system and the water softening device that are capable of further reducing negative effects on the environment can be achieved. According to the present embodiment, there can be achieved the water softening system and the water softening device that are capable of reducing wasted water at the time of subj ecting the separation unit to backwashing, the separation unit including the filtering medium for filtering and separating a metal ion-derived crystal, and are capable of reusing, as water containing a seed crystal, part of the water used for backwashing.

### Reference Signs List

1, 201 Water softening device
10, 210 Water softening system
20, 220 Water feed channel
22a Circulation channel
25, 232 Bypass channel
30, 230 Crystallization unit
40, 240 Separation unit
50, 260 Buffer tank
250 Classification/separation unit
60, 270 Main tank
70 Soft water tank
80 Filter (second separation unit)
221 Crystallization unit introduction channel
222 Separation unit introduction channel
223 Classification/separation unit introduction channel
224, 229 Returning channel
225 Treated water feed channel
226 Backwashing channel
PI Pump (pressure raising means, liquid feeding means, forcibly feeding means)
P2 Pump (pressure raising means)
S1 Pressure sensor (pressure measuring means)
P11, P12 Pump

## Claims

1. A water softening system, comprising:
a water feed channel through which water to be treated flows;
a crystallization unit that causes a metal ion contained in the water to be treated to precipitate; and
a separation unit that separates the water to be treated having passed through the crystallization unit into a crystal obtained through precipitation by the crystallization unit and soft water, wherein
the water feed channel is configured so that at least a part thereof functions as a feed channel being a pressure application system in a substantially sealed state, and
the crystallization unit and the separation unit are connected to parts corresponding to the feed channel being a pressure application system in a substantially sealed state in the water feed channel.

2. The water softening system according to claim 1, further comprising:
pressure measuring means that measures a pressure in the feed channel being a pressure application system in a substantially sealed state; and
pressure raising means that supplies water to the feed channel being a pressure application system in a substantially sealed state and raises a pressure, wherein
when the pressure in the feed channel being a pressure application system in a substantially sealed state, which is measured by the pressure measuring means, is less than a predetermined value, the pressure raising means is operated, and
when the pressure is equal to or greater than the predetermined value, the pressure raising means is stopped.

3. The water softening system according to claim 1 or 2, further comprising:
a buffer tank that is connected to the feed channel at a position upstream of the crystallization unit and stores the water to be treated.

4. The water softening system according to claim 3, wherein
the feed channel being a pressure application system in a substantially sealed state includes a circulation channel capable of circulating the water to be treated, which passes through the crystallization unit, in the buffer tank, and
liquid feeding means is connected to the feed channel being a pressure application system in a substantially sealed state, and circulates the water to be treated between the crystallization unit and the buffer tank.

5. The water softening system according to claim 4, wherein
forcibly feeding means is connected to the feed channel being a pressure application system in a substantially sealed state, and increases a water feed pressure and a flow rate of the water to be treated, which is fed into the separation unit, as compared to a pressure and a flow rate of the water to be treated circulating between the crystallization unit and the buffer tank.

6. The water softening system according to any one of claims 1 to 5, further comprising:
a second separation unit that removes a particle residue contained in the soft water after separation in the separation unit.

7. The water softening system according to any one of claims 1 to 6, further comprising:
a soft water tank that stores the soft water after separation of the separation unit.

8. The water softening system according to claim 7, wherein
when a water level of the soft water stored in the soft water tank is lower than a predetermined water level, water having a hardness degree higher than that of the soft water after separation in the separation unit is supplied.

9. The water softening system according to claim 8, wherein
a batch-type line for generating soft water is formed in the feed channel being a pressure application system in a substantially sealed state,
the soft water stored in the soft water tank has predetermined hardness after the water to be treated passes through the batch-type line for generating soft water for a plurality of times, and
water having a hardness level higher than that of the soft water is supplied after the water to be treated passes through the batch-type line for generating soft water in one pass.

10. The water softening system according to claim 8 or 9, wherein
the water feed channel includes a bypass channel that causes the water to be treated to flow out while bypassing the crystallization unit and the separation unit, and
water having a hardness level higher than that of the soft water is supplied after the water to be treated passes through the bypass channel.

11. The water softening system according to any one of claims 1 to 10, further comprising:
a main tank that stores the water to be treated that is caused to flow into the feed channel being a pressure application system in a substantially sealed state.

12. A water softening device, comprising the water softening system according to any one of claims 1 to 11.

13. A water softening system, comprising:
a crystallization unit that causes a metal ion contained in water to be treated, which contains the metal ion, to precipitate as a crystal;
a separation unit that includes a filtering medium for filtering the crystal obtained through precipitation in the crystallization unit;
a classification/separation unit that performs separation by classifying water to be treated that contains the crystal adhering to the filtering medium of the separation unit into water to be treated that contains a crystal having a small size and passing through the filtering medium of the separation unit and water to be treated that contains a crystal having a large size and not passing through the filtering medium, when the crystal adhering to the filtering medium of the separation unit is discharged to the outside of the system through backwashing; and
a returning channel that returns, to the crystallization unit or the upstream side of the crystallization unit, the water to be treated that contains the crystal having a small size among the two kinds of water to be treated after classification and separation in the classification/separation unit, wherein
when the water to be treated is softened, water to be treated passes through the crystallization unit and the separation unit at least once, and
when a crystal adhering to the filtering medium of the separation unit is discharged to the outside of the system through backwashing, the water to be treated passes through the separation unit and the classification/separation unit, the water to be treated that contains the crystal having a small size among the two kinds of water to be treated after classification and separation in the classification/separation unit returns to the crystallization unit or the upstream side of the crystallization unit through the returning channel, and the water to be treated that contains the crystal having a large size is discharged to the outside of the system.

14. The water softening system according to claim 13, wherein
classification and separation in the classification/separation unit are performed by a centrifugal force generated by a high-speed turning flow.

15. The water softening system according to claim 13 or 14, wherein
in a case where the water to be treated that contains the crystal having a large size is discharged to the outside of the system in a repeated manner, a ratio of an amount of water to be treated that is discharged to the outside of the system with respect to water to be treated that is supplied into the classification/separation unit is increased for each prescribed number of discharge operations.

16. The water softening system according to any one of claims 13 to 15, further comprising:
a buffer tank that is connected to the upstream side of the crystallization unit and stores the water to be treated, wherein,
the buffer tank is connected to the separation unit through intermediation of the returning channel.

17. The water softening system according to claim 16, wherein
a circulation operation mode is provided for softening water by circulating water to be treated through the buffer tank, the crystallization unit, and the separation unit, and
in the circulation operation mode, at least one of a circulation flow rate of the water to be treated or a pressure difference before and after the separation unit is measured, and the water to be treated that contains the crystal having a large size is discharged to the outside of the system when a circulation flow rate of the water to be treated is reduced from a predetermined value by a certain amount or more, and the reduction is measured, or when a pressure difference before and after the separation unit is increased from a predetermined value by a certain amount or more, and the increase is measured.

18. The water softening system according to any one of claims 13 to 17, further comprising:
a used water amount measurement unit that measures a used water amount of the water to be treated, wherein
the used water amount measurement unit measures a used water amount of the water to be treated, and the water to be treated that contains the crystal having a large size is discharged to the outside of the system for every certain used water amount.

19. The water softening system according to any one of claims 13 to 18, further comprising:
a main tank that stores water to be treated.

20. A water softening device, comprising the water softening system according to any one of claims 13 to 19.
